# EUROPÄISCHE PATENTSCHRIFT

(11) **EP 2 710 246 B1**
(45) Veröffentlichungstag und Bekanntmachung des Hinweises auf die Patenterteilung: **06.01.2021**
(21) Anmeldenummer: 12724291.5
(22) Anmeldetag: 15.05.2012
(51) Int. Cl.: F02D 41/02, F02D 25/00, F02D 29/06, H02J 1/14, H02P 9/04, F02D 41/14, B63J 3/00, B63H 21/21, F02B 63/04, F02B 77/13, F02B 75/16, H02J 4/00, B60L 50/13

(54) **VERFAHREN UND VORRICHTUNG ZUR STEUERUNG UND REGELUNG EINES BRENNKRAFTMASCHINEN-GENERATOR-SYSTEMS**
METHOD AND APPARATUS FOR PERFORMING OPEN-LOOP AND CLOSED-LOOP CONTROL OF AN INTERNAL COMBUSTION ENGINE GENERATOR SYSTEM
PROCÉDÉ ET DISPOSITIF DE COMMANDE ET DE RÉGULATION D'UN SYSTÈME MOTEUR À COMBUSTION INTERNE/GÉNÉRATEUR

(30) Priorität: 18.05.2011 DE 102011076073
(43) Veröffentlichungstag der Anmeldung: 26.03.2014
(73) Patentinhaber: MTU Friedrichshafen GmbH, 88045 Friedrichshafen (DE)
(72) Erfinder: FILIP, Gerhard, 88677 Markdorf (DE); SCHMALZING, Claus-Oliver, 88339 Bad Waldsee (DE); THOMAS, Hans-Jürgen, 88090 Immenstaad (DE); KOHL, Tobias, 88045 Friedrichshafen (DE)
(74) Vertreter: Eisenführ Speiser
(86) Internationale Anmeldenummer: PCT/EP2012/002082
(87) Internationale Veröffentlichungsnummer: WO 2012/156078

(56) Entgegenhaltungen:
- EP-A1- 1 914 162
- WO-A1-2011/011806
- DE-A1-102009 036 277
- DE-B3-102004 015 973
- US-A- 6 066 897

## Beschreibung

Die Erfindung betrifft ein Verfahren zur Steuerung und Regelung eines Brennkraftmaschinen-Generator-Systems gemäß dem Oberbegriff des Anspruchs 1. Die Erfindung betrifft weiter eine Einrichtung zur Steuerung und Regelung eines Brennkraftmaschinen-Generator-Systems und ein Brennkraftmaschinen-Generator-System. Die Erfindung betrifft auch ein Land- oder Wasser-Fahrzeug und eine stationäre Anlage zur Erzeugung elektrischer Energie mit einem Brennkraft-Maschinen-Generatorsystem.

Ein Brennkraftmaschinen-Generator-System der eingangs genannten Art weist eine Anzahl von an ein Verteilernetz anschließbaren, elektrische Leistung generierenden Brennkraftmaschinen-Generator-Einheiten auf. Über das Verteilernetz sind ebenfalls elektrische Leistung verbrauchende Lastverbraucher angeschlossen, welche die von den Brennkraftmaschinen-Generator-Einheiten generierte elektrische Leistung als Last verbrauchen. Eine vorgenannte Brennkraftmaschinen-Generator-Einheit weist eine drehzahlvariable Brennkraftmaschine und einen Generator auf. Eingesetzt werden solche Brennkraftmaschinen-Generator-Systeme für Großfahrzeuge, z. B. als Land- oder Wasserfahrzeug aber auch als stationäre Systeme. Generell hat eine Brennkraftmaschinen-Generator-Einheit die Funktion eines Stromerzeugungsaggregats, das z. B. einen Motor und einen Generator zum Antrieb des Generators -ggfs. über ein Getriebe- koppelt, wobei der Generator wiederum Strom erzeugt.

Üblicherweise wird bei einem Stromerzeugungsaggregat ein Dieselmotor möglichst mit konstanter Drehzahl betrieben. Da ein Dieselmotor durchaus auch bei höherer Drehzahl als den üblichen 1500 bzw. 1800 U/min betrieben werden kann --und damit mehr Leistung abgeben kann-- ist es in bestimmten begrenzten Betriebssituationen auch üblich, über leistungselektronische Maßnahmen einen drehzahlvariablen Betrieb zu ermöglichen. In dem Fall wird eine von der Drehzahl der Brennkraftmaschine abhängige Frequenz des vom Generator gelieferten elektrischen Stroms zunächst gleichgerichtet und dann wieder auf die im Verteilernetz gewünschte Frequenz des Stromaggregats wechselgerichtet. Insbesondere für einen solchen Fall wird eine Brennkraftmaschine, insbesondere ein Dieselmotor, gemäß einer dafür ausgelegten Kennlinie betrieben, die für jede Drehzahl eine entsprechende Leistung angibt. Eine solche Kennlinie, verläuft üblicherweise in einem sicheren Abstand zur Drehzahl und oder Drehmoment bedingten Leistungsgrenze, die über eine sogenannte DBR- bzw. MCR-Kurve eines Dieselmotors angegeben werden kann. Dadurch wird gewährleistet, dass eine entsprechende Leistungsreserve für den Dieselmotor vorgehalten wird, die dazu dienen soll bei variabler Lastabnahme vom Dieselmotor genügend Leistungsreserve zur Verfügung zu haben. Ein solcher Betrieb eines Dieselmotors ist jedoch regelmäßig nicht verbrauchsoptimal.

So ist beispielsweise aus DE 199 37 139 C1 ein Verfahren zur Steuerung einer eigentlich stationär zu betreibenden Brennkraftmaschine bekannt, bei dem mit Erkennen einer signifikanten Lastverringerung am Abtrieb der Einspritzbeginn nach spät verstellt wird. Die dazu vorgesehene Drehzahlbegrenzungskurve zur Begrenzung der Solleinspritzmenge schränkt den Verstellbereich im stationären Betriebszustand ein. Aus DE 103 02 263 B3 ist ein Verfahren bekannt, bei dem im stationären Betriebszustand die Solleinspritzmenge über eine erste Drehzahlbegrenzungskurve begrenzt wird. Mit Erkennen eines dynamischen Betriebszustands wird auf eine zweite Drehzahlbegrenzungskurve umgeschaltet.

Wünschenswert ist es, eine Brennkraftmaschine, insbesondere eine Diesel-Brennkraftmaschine, im Rahmen einer Brennkraftmaschinen-Generator-Einheit als Teil eines Brennkraftmaschinen-Generator-Systems optimiert zu betreiben, d. h. beispielsweise mit vergleichsweise gutem spezifischen Kraftstoffverbrauch und dennoch ausreichend großem Lastaufschaltvermögen.

Aus der DE 10 2009 036 277 A1 ist eine Mehrmotorenanlage mit einer Mehrzahl von antriebsmäßig zu einer Funktionseinheit gehörenden Verbrennungsmotoren bekannt. Jeder Verbrennungsmotor weist eine adaptive Motorsteuereinrichtung auf. Diese Motorsteuereinrichtungen sind derart miteinander signalverbunden, dass zwischen ihnen ein Informationsaustausch hinsichtlich ihrer Optimierungen gewährleistet ist. Dabei sollen Optimierungsergebnisse eines der Verbrennungsmotoren der Optimierung wenigstens eines weiteren der Verbrennungsmotoren zugrunde gelegt werden.

Die EP 1 914 162 A1 beschreibt ein Energieverteilungssystem, das es einem Energie- und Antriebssystem für Schiffsanwendungen ermöglicht, eine maximale Energiedichte, Effizienz und Stabilität zu erreichen. Das Energieverteilungssystem enthält eine Energiequelle, beispielsweise einen Dieselgenerator.

Aus der US 6,066,897 A ist eine automatische Lastverteilungsvorrichtung bekannt, die eine Vielzahl von parallel geschalteten Brennkraftmaschinen-Generator-Kombinationen aufweist, die eine gemeinsame Last betreiben. Für die verschiedenen Brennkraftmaschinen-Generator-Kombinationen werden Lastfaktoren bestimmt und aus diesen ein Maximum-Lastfaktor ermittelt. Der ermittelte Maximum-Lastfaktor wird über einen Bus an die Brennkraftmaschinen-Generator-Kombinationen übermittelt. Die Lastfaktoren der verschiedenen Brennkraftmaschinen sollen dann gleich dem Maximum-Lastfaktor eingestellt werden.

Aus der JP 2011-63256 A ist ein Hybridantrieb für ein Schiff bekannt, der einen Hauptmotor und eine elektrische Maschine aufweist, die sowohl als Motor zum Antreiben des Schiffs als auch als Generator zum Erzeugen von elektrischem Strom eingesetzt werden kann. In Abhängigkeit von der momentanen Lastanforderung erfolgt eine Aufteilung der vom Hybridantrieb zu erbringenden Leistung auf den Hauptmotor und/oder die als Motor betriebene elektrische Maschine.

Bei einem Brennkraftmaschinen-Generator-System mit einem Parallelbetrieb von einer Anzahl von Brennkraftmaschinen-Generator-Einheiten --auch GENSET genannt- können deren jeweilige Betriebspunkte aufgrund der vorgenannten Unabhängigkeit von Leistung und Drehzahl bei einer Diesel-Brennkraftmaschine grundsätzlich optimiert werden. Bei einem solchen Parallelbetrieb von z. B. mehreren Stromerzeugungsaggregaten wird die Leistung auf die Aggregate z. B. gemäß der Nennleistungen der Diesel-Brennkraftmaschine aufgeteilt und Laständerungen werden ebenso auf die Aggregate verteilt. Bei üblichen Regelungen kann im Rahmen von Zu- oder Abschaltvorgängen grundsätzlich das Problem von Überschwingverhalten auftreten. Dies kann teilweise in einer sogenannten "P-Grad-Regelung" behoben werden wie sie beispielsweise in DE 10 2004 015 973 B3 der Anmelderin beschrieben ist. Dabei wird eine höhere Leistung vom Betreiber über die Erhöhung einer Solldrehzahl-Vorgabe eingestellt und eine höhere Solleinspritzmenge bewirkt eine höhere Leistungsabgabe der Brennkraftmaschine. Dabei ist auch vorgesehen, dass eine Erhöhung der Solldrehzahl-Vorgabe eine Verschiebung der Drehzahlbegrenzungskurve zu höheren Ist-Drehzahlen bewirkt. In einer Ausgestaltung wird vorgeschlagen, dass eine Abregelkurve der Drehzahlbegrenzungskurve über den "P-Grad" veränderbar ist. Im Ergebnis haben die stationären Betriebspunkte der Dieselmotoren der Stromerzeugungsaggregate dann einen genügenden Abstand zu der Grenzkurve (DBR-Kurve), so dass Lastaufschaltungen und Laständerungen übernommen werden können. Das vorgenannte Verfahren hat sich bewährt für den grundsätzlich stationären Betrieb und bei allgemein vorgegebenen Laständerungen, die beispielsweise in Normen und Vorschriften festgelegt sind.

Grundsätzlich eignen sich alle vorgenannten Konzepte jedoch nur bedingt für einen dynamischen, höchst drehzahlvariablen --d. h. tatsächlich z. B. ständig transientenBetrieb eines Brennkraftmaschinen-Generator-Systems und den darin vernetzten Brennkraftmaschinen-Generator-Einheiten.

An dieser Stelle setzt die Erfindung an, deren Aufgabe es ist, ein Verfahren zur Steuerung und Regelung der eingangs genannten Art in verbesserter Weise für einen transienten Betrieb eines Brennkraftmaschinen-Generator-Systems auszugestalten. Insbesondere soll, ggfs. unter Berücksichtigung von an sich bewährten Konzepten für den stationären Betrieb, ein Verfahren zur Steuerung und Regelung eines Brennkraftmaschinen-Generator-Systems angegeben werden, das gerade für den transienten Betrieb zum einen eine ausreichende Leistungsreserve für das System bzw. die Einheit zur Verfügung stellt und zum anderen einen optimierten Betrieb des Systems bzw. der Einheit ermöglicht. Insbesondere soll das Verfahren die Möglichkeit bieten, eine Optimierungsvorschrift je nach Zweckmäßigkeit und Einsatzbedarf des Anwenders auszuwählen. Aufgabe der Erfindung ist es ebenso, eine geeignete Vorrichtung zur Durchführung des Verfahrens anzugeben.

Die Aufgabe betreffend das Verfahren wird durch ein Verfahren der eingangs genannten Art gelöst, bei dem erfindungsgemäß die Schritte des kennzeichnenden Teils des Anspruchs 1 vorgesehen sind. Die Erfindung führt zur Lösung der Aufgabe hinsichtlich der Vorrichtung auch auf eine Einrichtung zur Steuerung und Regelung gemäß den Merkmalen des Anspruchs 16.

Die Erfindung führt zur Lösung der Aufgabe hinsichtlich der Vorrichtung auch auf ein Brennkraftmaschinen-Generator-System gemäß dem Anspruch 18 mit einer Anzahl von an ein Verteilernetz anschließbaren, elektrische Leistung generierenden Brennkraftmaschinen-Generator-Einheiten und Leistung elektrische verbrauchenden Lastverbrauchern, wobei eine Einheit eine drehzahlvariable Brennkraftmaschine und einen Generator aufweist und mit einer Einrichtung zur Steuerung und Regelung gemäß dem Konzept der Erfindung versehen ist.

Unter einer Brennkraftmaschine kann grundsätzlich jede Art eines Motors oder dergleichen durch Brennkraft angetriebene Maschine verstanden werden. Im vorliegenden Fall ist das Konzept der Erfindung besonders effektiv umsetzbar mit einer Diesel-Brennkraftmaschine, was jedoch nicht einschränkend wirken soll. Unter einer Brennkraftmaschinen-Generator-Einheit ist insbesondere ein Motor-Stromerzeugungs-Aggregat, insbesondere ein Dieselmotor-Stromerzeugungs-Aggregat zu verstehen. Unter einem Brennkraftmaschinen-Generator-System ist insbesondere eine Brennkraftmaschinen-Generator-Anlage zu verstehen, in der mehrere Brennkraftmaschinen-Generator-Einheiten parallel betrieben werden können.

Die Erfindung führt auch auf ein Land- oder Wasserfahrzeug gemäß dem Anspruch 19 mit einem Brennkraftmaschinen-Generator-System der vorgenannten Art. Insbesondere kann ein Landfahrzeug ein Allzweckfahrzeug oder Nutzfahrzeug sein. Ein Wasserfahrzeug, bei dem sich das Brennkraftmaschinen-Generator-System der Erfindung besonders bewährt hat, ist z. B. ein Yachtschiff, insbesondere eine sogenannte Megayacht. Beispielhaft wird das Konzept der Erfindung anhand eines Brennkraftmaschinen-Generator-Systems für eine Megayacht in Bezug auf die Zeichnung weiter unten erläutert.

Die Erfindung führt auch auf eine stationäre Anlage gemäß dem Anspruch 20 zur Erzeugung elektrischer Energie mit einem Brennkraftmaschinen-Generator-System gemäß dem Konzept der Erfindung.

Die Erfindung hat erkannt, dass bislang ein genügendes Lastaufschaltvermögen und eine Optimierung eines Betriebszustand zur Verfügung stellendes Systems bzw. eine Einheit im System unter Berücksichtigung von aktuellen Betriebszuständen bzw. von aktuellen Lastanforderungen in einem kontinuierlich transienten Zustand nicht möglich erschien.

Betreffend das Verfahren sehen erfindungsgemäß die im Anspruch 1 genannten Schritte (a) und (b) vor:
(a) Bestimmen eines aktuellen Betriebszustands (Z*) der Brennkraftmaschine der wenigstens einen Brennkraftmaschinen-Generator-Einheit;
(b) Ableiten eines Lastaufschaltvermögens (L^{adm}) in Abhängigkeit vom aktuellen Betriebszustand Z* beschreibenden Betriebszustandsbereich (ZB*) für die Brennkraftmaschine der wenigstens einen Brennkraftmaschinen-Generator-Einheit.
   - Erfindungsgemäß ist vorgesehen, dass das Bestimmen des aktuellen Betriebszustands (Z*) und das Ableiten des Betriebszustandsbereich (ZB*) auf Grundlage eines Rechenmodells für die Brennkraftmaschine erfolgt.

Die Erfindung geht von der Überlegung aus, dass das transiente Verhalten von Dieselmotoren in einem dynamischen Betriebszustand und das damit verbundene, eine Leistungsreserve charakterisierende Lastaufschaltvermögen eines Dieselmotors von einer Anzahl verschiedenster Parameter abhängen kann. Zu den Parametern kann zum Beispiel die aktuelle Leistung, die aktuelle Drehzahl und die Temperatur eines Motors aber auch seine Umgebungstemperatur, der Luftdruck etc. gehören. Grundsätzlich hat sich bei aller Komplexität eines drehzahlvariablen Betriebs eines Dieselmotors gezeigt, dass ein vergleichsweise guter spezifischer Kraftstoffverbrauch beim Dieselmotor nahe unterhalb, ggfs. sogar leicht oberhalb seiner im wesentlichen für den stationären Betrieb vorgegebenen Leistungsgrenze, d. h. insbesondere im Bereich um eine vorgenannte DBR- bzw. MCR-Kurve, vorliegt. Jenseits insbesondere der MCR-Kurve sollte der Dieselmotor jedoch nicht dauernd betrieben werden. Die Erfindung geht weiter von der Überlegung aus, dass ein Dieselmotor genau dann einen vergleichsweise guten spezifischen Kraftstoffverbrauch annehmen kann, wenn er naturgemäß nur ein vergleichsweise geringes Lastaufschaltvermögen und damit nur ein vergleichsweise geringes Beschleunigungsvermögen zur Verfügung hat. Die Erfindung hat erkannt, dass sich dennoch eine optimierte Betriebsweise, d. h. beispielsweise mit vergleichsweise gutem spezifischen Kraftstoffverbrauch und dennoch ausreichend großem Lastaufschaltvermögen, im Rahmen einer geeigneten rechenmodell-basierten Regelung erreichen lässt.

Das Konzept der Erfindung sieht --verkürzt ausgedrückt-- eine modellbasierte Regelung vor, mit der eine Brennkraftmaschine, beispielsweise ein Dieselmotor, gerade im transienten Betrieb vergleichsweise genau simuliert werden kann. Über das Rechenmodell ist nicht nur der aktuelle transiente Zustand (Z*) der Brennkraftmaschine einer Brennkraft-maschinen-Generator-Einheit bestimmbar sondern es kann zudem ein Betriebszustandsbereich (ZB*) und damit ein jedenfalls grundsätzlich zur Verfügung stehendes Lastaufschaltvermögen (L^{adm}) in Abhängigkeit vom aktuellen Betriebszustand (Z*) abgeleitet werden. Der Betriebszustand und das für den Betriebszustand zur Verfügung stehende Lastaufschaltvermögen einer Diesel-Brennkraftmaschine beispielsweise ist aufgrund des Konzepts der Erfindung praktisch in jedem Zustand eines auch transienten Betriebs einer Einrichtung zur Steuerung und Regelung des Brennkraftmaschinen-Generator-Systems bekannt.

Betreffend die Einrichtung zur Steuerung und Regelung ist erfindungsgemäß vorgesehen, dass entsprechende Regel- und Prozessormittel zum Bestimmen des aktuellen Betriebszustandes und zum Ableiten des Lastaufschaltvermögens auf Grundlage des Rechenmodells, bevorzugt in einer zweiten, die drehzahlvariable Brennkraftmaschine betreffenden Teilregelung, implementiert sind.

Dieser Ansatz des Konzepts der Erfindung bildet die Basis dafür, dass die Einrichtung zur Steuerung und Regelung die Brennkraftmaschine, insbesondere eine Diesel-Brennkraftmaschine, beispielsweise einen Dieselmotor, abhängig von den zu erwartenden Lastanforderungen von Lastverbrauchern und dennoch in einem optimalen Betriebspunkt betrieben werden kann - also mit ausreichendem Lastaufschaltvermögen und dennoch in optimierter Weise, vorzugweise je nach Wahl einer bestimmten geeigneten Optimierungsstrategie.

Das Verfahren gemäß dem Konzept der Erfindung sieht erfindungsgemäß den weiteren Schritt (c) vor, nämlich
(c) Bereitstellen eines mögliche Lastanforderungen der Anzahl von Lastverbraucher beschreibenden Lastanforderungsumfangs.

Bezugnehmend auf die erfindungsgemäße Einrichtung zur Steuerung und Regelung des Brennkraftmaschinen-Generator-Systems ist erfindungsgemäß vorgesehen, dass entsprechende Regel- und Prozessormittel für den Schritt (c) --bevorzugt in einer ersten das System betreffenden übergeordneten ersten Teilregelung-- implementiert sind.

Es ist zusätzlich vorgesehen, dass
(d) unter Berücksichtigung des aktuellen Betriebszustand und des Lastaufschaltvermögens der Brennkraftmaschine der wenigstens einen Brennkraftmaschinen-Generator-Einheit:
- eine Anzahl von an das Verteilernetz anzuschließenden Brennkraftmaschinen-Generator-Einheiten in Abhängigkeit des Lastanforderungsumfangs bestimmt wird, und
- eine variable Lastverteilung und einer variablen Drehzahlverteilung auf die Anzahl Brennkraftmaschinen der Anzahl Brennkraftmaschinen-Generator-Einheiten in Abhängigkeit des Lastanforderungsumfangs bestimmt wird.

Der Lastanforderungsumfang wird also im Wesentlichen erfüllt im Rahmen einer variablen Lastverteilung und Drehzahlverteilung, wobei die Lastverteilung möglichst die geforderte Lastaufschaltung wiedergeben sollte, die gemäß dem Lastanforderungsumfang auf die einzelnen Aggregate von Brennkraftmaschinen-Generator-Einheiten zu verteilen ist. Insbesondere wird dabei nicht nur ermittelt, ob ein weiteres Aggregat benötigt wird, sondern ggfs. auch berechnet, ob ein Aggregat abgestellt werden kann.

Das Konzept der Erfindung bietet damit die Basis für einen --abhängig vom aktuellen Betriebszustand (Z*)-- sicheren Betrieb einer beispielsweise Diesel-Brennkraftmaschine im Rahmen des über den Betriebszustandsbereich (ZB*) bekannten Lastaufschaltvermögens (L^{adm}), wobei der sowohl stationäre als auch transiente Betrieb in dem Betriebszustandsbereich optimiert werden kann. Anders ausgedrückt bietet das Konzept der Erfindung auch für einen transienten Betrieb eines Brennkraftmaschinen-Generator-Systems die Möglichkeit, einen sicheren und gleichzeitig unter Randbedingungen optimal gewählten Betriebspunkt für das Brennkraftmaschinen-Generator-System bzw. für die einzelnen Brennkraftmaschinen-Generator-Einheiten einzuregeln, insbesondere kontinuierlich nachzuregeln.

In besonders vorteilhafter Weise wird ein vorgenanntes Verfahren zur Steuerung und Regelung in einer Regelschleife betrieben, bei welcher ein aktueller Betriebszustand und Betriebszustandsbereich (Z*, ZB*) kontinuierlich wiederholt bestimmt werden, so dass das Verfahren zur Steuerung und Regelung in der Lage ist, auch vergleichsweise hochdynamische Betriebszustände von Brennkraftmaschinen im Rahmen eines Brennkraftmaschinen-Generator-Systems nachzuregeln - dies unter Wahrung eines ausreichenden Lastaufschaltvermögens und unter optimierten Betriebsgesichtspunkten.

Vorteilhaft wird bei einem vorgenannten Verfahren zur Steuerung und Regelung ein Lastabwurf oder Notbetrieb des Brennkraftmaschinen-Generator-Systems in der Tat nur in Ausnahmesituationen notwendig, nämlich beschränkt auf einen tatsächlichen Überlastungsbereich des Brennkraftmaschinen-Generator-Systems.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Bezugnehmend auf die Einrichtung zur Steuerung und Regelung des Brennkraftmaschinen-Generator-Systems ist vorteilhaft weiter vorgesehen, dass entsprechende Regel- und Prozessormittel für den Schritt (c) und zusätzlich (d) in einer ersten das System betreffenden übergeordneten ersten Teilregelung implementiert sind.

Verkürzt ausgedrückt sieht eine weitere Weiterbildung des Konzeptes der Erfindung betreffend die Einrichtung weiter vor, dass ein erster Teilregler auf Systemebene den vorgenannten zweiten Teilregler auf Brennkraftmaschinenebene überlagert. Zum einen ist der erste Teilregler vorgesehen, um -z. B. mit Hilfe eines digitalen Signalprozessorsmodellbasiert den aktuellen Betriebszustand (Z*) und einen daraus abgeleiteten für das Lastaufschaltvermögen relevanten Betriebszustandsbereich (ZB*) zu bestimmen. Diese Informationen werden auch dem zweiten Teilregler zur Verfügung gestellt, der diese zusammen mit der Information eines Lastanforderungsumfangs nutzt, um die Anzahl von benötigten Brennkraftmaschinen-Generator-Einheiten zu bestimmen. Insbesondere ist der zweite Teilregler auch ausgelegt, die Lasten und Drehzahlen in Abhängigkeit des Lastanforderungsumfangs auf die nötigen Brennkraftmaschinen-Generator-Einheiten zu verteilen.

Gemäß einer besonders bevorzugten Weiterbildung wird --insbesondere in der zweiten, die drehzahlvariable Brennkraftmaschine betreffenden Teilregelung-- abgefragt, ob ein auf die angeforderte Einheit bezogener Betrag einer variablen Lastverteilung in Bezug auf den aktuellen Betriebszustand innerhalb eines zulässigen, das Lastaufschaltvermögen beschreibende Betriebszustandsbereichs der Brennkraftmaschine liegt. Abhängig von dem Ergebnis einer solchen Abfrage hat es sich als vorteilhaft erwiesen, die Drehzahl der Brennkraftmaschine ggfs. derart zu ändern, dass ein neuer Betriebszustand (Z*) der Brennkraftmaschine wieder an einer bevorzugten Stelle innerhalb eines zulässigen Betriebszustandsbereich (ZB*) liegt, d.h. mit ausreichendem Lastaufschaltvermögen (L^{adm}).

Insbesondere kann in einer weiterführenden Weiterbildung dieses Prozesses dienenden Abfrage auch eine andere den Betriebszustand der Brennkraftmaschine bestimmende Größe geändert werden. Auch diese Maßnahme kann sicherstellen, dass der neue Betriebszustand (Z*) der Brennkraftmaschine innerhalb eines zulässigen Betriebszustandsbereichs (ZB*) derart platziert ist, dass ein ausreichendes Lastaufschaltvermögen (L^{adm}) zur Verfügung steht, um dem auf die angeforderte Einheit bezogenen Betrag einer variablen Lastverteilung auch in einem transienten Betriebszustand zu genügen.

Besonders vorteilhaft weist das Verfahren den weiteren Schritt auf: (e) Vergleichen des Lastaufschaltvermögens mit der lastanforderungsumfangsabhängigen variablen Lastverteilung für die Brennkraftmaschine.

Der Verfahrensschritt (e) ist besonders vorteilhaft in der zweiten, die drehzahlvariable Brennkraftmaschine betreffenden Teilregelung durchführbar.

Darüber hinaus hat es sich als besonders vorteilhaft erwiesen, ein Lastaufschaltvermögen an einem aktuellen Betriebszustand (Z*) durch im Wesentlichen wenigstens zwei die transiente Entwicklung einer Leistung beschreibende Parameter zu charakterisieren. Als besonders vorteilhaft hat sich die Heranziehung eines Leistungssprungs (ΔP) einerseits und die Heranziehung einer Leistungsrampe (δP) andererseits erwiesen. Unter einem Leistungssprung (ΔP) ist ein Leistungsbetrag zu verstehen, der praktisch instantan in vergleichsweise sehr kurzer Zeit zur Verfügung stehen soll. Unter einer Leistungsrampe (δP) ist ein Leistungsbetrag zu verstehen, der über einen festlegbaren akzeptablen Zeitraum, z. B. über eine Regelungsrampe mit definiertem Endpunkt und Steilheit, angefahren werden kann - also nicht zum frühest möglichen sondern erst nach einem bestimmten Zeitraum zur Verfügung stehen kann, der deutlich länger ist, als der für einen Leistungssprung zur Verfügung stehende Zeitraum. Insofern kann es sich bei einem Leistungssprung und einer Leistungsrampe durchaus um einen gleichen zur Verfügung zustellenden Leistungsbetrag handeln. Bei einem Leistungssprung hat dieser jedoch praktisch instantan zu einem frühest möglichen Zeitpunkt zur Verfügung zu stehen und bei einer Leistungsrampe kann dieser in definierter Weise über einen längeren Zeitraum angeregelt werden.

Die Parameter eines Leistungssprungs und einer Leistungsrampe lassen sich innerhalb dem das Lastaufschaltvermögen (L^{adm}) umschreibenden Betriebszustandsbereich (ZB*) für die Brennkraftmaschine definieren. Insofern kann ein Betriebszustandsbereich (ZB*) auch als ein maximal möglicher Betrag einer Zustandsgröße und ein Lastaufschaltvermögen (L^{adm})als ein ggfs. gleicher oder geringerer zulässiger Betrag einer Zustandsgröße für eine Betriebszustand (Z*) aufgefasst werden. Das vorliegend weitergebildete Konzept bietet eine bevorzugte Grundlage, um einen Betriebszustand (Z*) einer Brennkraftmaschine derart einzuregeln, dass dieser auch bei einem Leistungssprung oder einer Leistungsrampe einen noch ausreichenden Abstand zu den Grenzen des Betriebszustandsbereichs (ZB*) hält. Um einen maximal möglichen Betrag einer Zustandsgröße handelt es sich in dieser Weiterbildung insofern um einen die Grenzen des Betriebszustandsbereichs beschreibenden Betrag.

Die vorgenannte Vergleichsabfrage zwischen Lastaufschaltvermögen und Lastverteilung wird bevorzugt in der zweiten, die drehzahlvariable Brennkraftmaschine betreffenden Teilregelung in besonders bevorzugter Weise als Vergleich zwischen einem zulässigen Leistungssprung bzw. einer zulässigen Leistungsrampe einerseits und einem aufgrund der variablen Lastverteilung angeforderten Lastsprungs bzw. Lastrampe andererseits durchgeführt.

Insbesondere im Rahmen einer ersten das System betreffenden, übergeordneten ersten Teilregelung hat es sich als vorteilhaft erwiesen, die Anzahl von an das Verteilernetz anzuschließende Brennkraftmaschinen-Generator-Einheiten zu bestimmen. Dies erfolgt zweckmäßigerweise im Rahmen der ersten Teilregelung in Abhängigkeit des Anforderungsumfangs. Besonders vorteilhaft wird dazu in der ersten Teilregelung ein Vergleich der Lastsumme der Verbraucher mit der Leistungssumme der Brennkraftmaschinen-Generator-Einheiten durchgeführt. Vorteilhaft erfolgt zunächst nur ein Vergleich der Lastsumme der Lastverbraucher und der aktuellen Leistungssumme der Brennkraftmaschinen-Generator-Einheiten. Wird dabei eine Tendenz erkannt, dass die Lastsumme der Lastverbraucher höher als die aktuelle Leistungssumme der Brennkraftmaschinen sein könnte sieht eine Weiterbildung vor, dass die Anzahl von am Verteilernetz angeschlossenen Brennkraftmaschinen-Generator-Einheiten frühzeitig erhöht wird. Dadurch lässt sich eine mögliche Überlastung des Systems frühzeitig erkennen und vermeiden.

Liegt die Anzahl der benötigten Brennkraftmaschinen-Generator-Einheiten fest kann eine Lastverteilung und/oder eine Drehzahlverteilung durchgeführt werden.

Für die das System betreffende übergeordnete erste Teilregelung lässt sich auf besonders bevorzugte Weise eine summarische Randbedingung definieren, die in vorteilhafter Weise dazu dient einen optimierten Betriebspunkt des gesamten Brennkraftmaschinen-Generator-Systems zu unterstützen. Insbesondere hat es sich als vorteilhaft erwiesen, dass generell die Bestimmung einer variablen Lastverteilung und Drehzahlverteilung einer summarischen Randbedingung unterworfen wird. Dazu wird vorteilhaft gefordert, dass die Summe aller Lastaufschaltvermögen der Brennkraftmaschinen auf Grundlage des Rechenmodells größer ist als der Lastanforderungsumfang der Anzahl von Lastverbrauchern. Das Einstellen einer variablen Lastverteilung und/oder einer variablen Drehzahlverteilung unter Zugrundelegung der vorgenannten summarischen Randbedingung sichert somit in verlässlicher Weise den Betrieb des gesamten Brennkraftmaschinen-Generator-Systems mit ausreichendem Lastaufschaltvermögen einerseits als auch an einem optimierten Betriebspunkt andererseits.

So lässt sich beispielsweise unter bevorzugter weiterbildenden Definition des Lastanforderungsumfang in der oben genannten Weise die summarische Randbedingung dadurch bilden, dass die Summe aller einzelnen möglichen Leistungssprünge größer ist als ein Maximum der Lastsprünge der Anzahl von Lastverbrauchern. Auch lässt sich in bevorzugter Weise die summarische Randbedingung dadurch bilden, dass die Summe aller einzelnen möglichen Leistungsrampen größer ist als ein übergeordneter Wert der Lastrampen.

In diesem Zusammenhang als auch generell hat es sich als besonders vorteilhaft erwiesen, dass eine mögliche Lastanforderung des wenigstens einen Lastverbrauchers bestimmt ist durch eine Wirklast P^{L}, einen Lastsprung (ΔP^{L}) und eine Lastrampe (δP^{L}). Dadurch lässt sich in besonders bevorzugter Weise ein Lastanforderungsumfang der Anzahl von Lastverbrauchern bestimmen; bevorzugt durch eine Summe der Wirklasten (SUM(Pᵢ^{L})), sowie einem Maximum der Lastsprünge (MAX(ΔPᵢ^{L})) als auch einem übergeordneten Wert der Lastrampen (RESBL(δPᵢ^{L})) von einer Anzahl (i) von Lastverbrauchern. Letzterer übergeordneter Wert kann beispielsweise ein angemessener und nach üblichen Betriebsbedingungen vernünftiger Wert einer Lastrampe für das gesamte System sein.

Insgesamt wird gemäß einer oder einer Kombination der vorgenannten Weiterbildungen erreicht, dass nicht nur das Brennkraftmaschinen-Generator-System als Ganzes mit ausreichenden Lastaufschaltvermögen und bei einem optimierten Betriebszustand gefahren wird, sondern darüber hinaus auch jede einzelne Brennkraftmaschinen-Generator-Einheit des Systems mit ausreichenden Lastaufschaltvermögen und in einem optimierten Betriebszustand gefahren wird. Diese Vorteile werden aufgrund des implementierten Rechenmodells nicht nur für einen weitgehend stationären Betrieb des Systems bzw. einer Einheit des Systems erreicht. Vielmehr ist ein Steuer- und Regelverfahren bzw. eine Steuer- und Regeleinheit gemäß dem Konzept der Erfindung ausgelegt, gerade in einem transienten Betrieb einer Einheit bzw. des gesamten Systems zu greifen. Besonders bevorzugt basiert der Erfolg des Konzepts darauf, dass bei der drehzahlvariablen Brennkraftmaschine die Drehzahl und die Leistung bedingt unabhängig einstellbar sind. Insbesondere hat es sich als vorteilhaft erwiesen, dass in einer zweiten Teilregelung die Drehzahl der drehzahlvariablen Brennkraftmaschine angepasst wird. Bevorzugt kann die Leistung einer Brennkraftmaschine im Rahmen einer Lastverteilung in einer ersten Teilregelung angepasst werden.

Insbesondere hat es sich als vorteilhaft erwiesen, dass eine Drehzahl der Brennkraftmaschine und/oder eine sonstige den Betriebszustand kennzeichnende Größe geändert wird, wenn ein auf die angeforderte Einheit bezogener Betrag einer variablen Lastverteilung in Bezug auf den aktuellen Betriebszustand (Z*) zu einem neuen Betriebszustand führen würde, der außerhalb eines zulässigen oder möglichen, das Lastaufschaltvermögen erhaltenden Betriebszustandsbereichs (ZB*) der Brennkraftmaschine liegt. Eine Drehzahl der Brennkraftmaschine und/oder eine sonstige den Betriebszustand kennzeichnende Größe kann auch geändert werden, wenn eine noch nicht optimierte Größe des Rechenmodells vom Steuer- und Regelverfahren erkannt wird. In dem Fall kann das Verfahren vorteilhaft einen weiteren Optimierungsbedarf erkennen und umsetzen.

Besonders vorteilhaft wird zur Umsetzung des Steuer- und Regelverfahrens für die erste und/oder zweite Teilregelung eine Optimierungsstrategie vorgegeben. Unter deren Randbedingung kann vorteilhaft innerhalb eines zulässigen oder möglichen Betriebszustandsbereichs (ZB*) ein neuer Betriebszustand (Z*) der Brennkraftmaschine eingestellt werden, der auch den durch die Optimierungsstrategie vorgegebenen Randbedingungen genügt. Eine Optimierungsstrategie kann beispielsweise durch Vorgabe von Randbedingungen für minimierte Lebenszykluskosten definiert werden. Eine andere Optimierungsstrategie kann beispielsweise durch Vorgabe von Randbedingungen für einen minimierten Kraftstoffverbrauch vorgegeben werden. Eine andere Optimierungsstrategie kann beispielsweise durch die Vorgabe von Randbedingungen betreffend eine maximierte Verfügbarkeit der Brennkraftmaschine vorgegeben werden. Eine andere Optimierungsstrategie kann beispielsweise durch die Vorgabe von Randbedingungen für eine minimierte Signatur vorgegeben werden. Solche und andere Parametereinstellungen lassen sich beispielsweise durch nutzerseitige Eingaben in eine Einrichtung zur Steuerung und Regelung des Brennkraftmaschinen-Generator-Systems vorgeben oder auswählen.

Je nach Erfordernissen einer dynamischen Zeitskala für einen transienten Betriebszustand des Brennkraftmaschinen-Generator-Systems ist eine für die erste und/oder zweite Teilregelung maßgebliche Regelschleife zu durchlaufen. Die in dem Verfahren zur Steuerung und Regelung des Brennkraftmaschinen-Generator-Systems genannten Schritte a) bis d) sowie optional die in den Weiterbildungen genannten Schritte, z. B. Schritt e), werden je nach Dynamik eines transienten Betriebszustands mehr oder weniger häufig wiederholt.

Insbesondere wird gemäß dem Konzept der Erfindung bevorzugt das rechenmodellbasierte Bestimmen des aktuellen Betriebszustands (Z*) und ein Ableiten eines Lastaufschaltvermögens (L^{adm}) in Abhängigkeit vom aktuellen Betriebszustand (Z*) vergleichsweise häufig wiederholt, um möglichst jeder maßgeblichen Zustandsänderung der Brennkraftmaschine im transienten Betrieb Rechnung tragen zu können. Die Wiederholung der weiteren vorgenannten Schritte dient dann dem neuerlichen Anfahren eines wiederum mit ausreichenden Lastaufschaltvermögen versehenen Betriebszustands bzw. eines hinsichtlich einer optionalen Optimierungsstrategie optimierten Betriebszustands. Im Ergebnis kann dies zu einer kontinuierlichen Nachregelung des Systems bzw. der Einheiten des Systems gemäß dem grundsätzlichen Konzept der Erfindung führen.

Für das Rechenmodell selbst hat sich ein thermodynamisches Modell am Betriebszustand der Brennkraftmaschine als besonders bevorzugt erwiesen. Das thermodynamischen Rechenmodell berücksichtigt in besonders bevorzugter Weise eine Anzahl von Zustandsgrößen, die ausgewählt sind aus der Gruppe bestehend aus: Leistung, Drehzahl und Temperatur der Brennkraftmaschine, Umgebungstemperatur und Umgebungsdruck, Abgasgegendruck sowie Trägheitsmoment und spezifischer Kraftstoffverbrauch der Brennkraftmaschinen-Generator-Einheit. Grundsätzlich müssen nicht alle sondern vielmehr können eine beliebige Anzahl dieser Zustandsgrößen einzeln oder in Kombination zur Definition eines aktuellen Betriebszustands (Z*) der Brennkraftmaschine herangezogen werden. Zwar erweist sich die Berücksichtigung wenigstens aller vorgenannter Zustandsgrößen zur ausreichenden Definition eines Betriebszustands der Brennkraftmaschine als vorteilhaft. Für bestimmte Regelungsaspekte hat sich jedoch eine spezifische Auswahl von zwei oder mehreren bestimmten Zustandsgrößen als bevorzugt erwiesen. Dies kann insbesondere die Kombination der Zustandsgrößen aus Leistung und Drehzahl der Brennkraftmaschine oder aus Leistung und Temperatur der Brennkraftmaschine oder eine Kombination aus Drehzahl und Temperatur der Brennkraftmaschine betreffen.

Ausführungsbeispiele der Erfindung werden nun nachfolgend anhand der Zeichnungen beschrieben. Diese sollen die Ausführungsbeispiele nicht notwendigerweise maßstäblich darstellen, vielmehr sind die Zeichnungen, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Weitere Vorteile, Merkmale und Einzelheiten der Erfindung ergeben sich aus der nachfolgenden Beschreibung der bevorzugten Ausführungsformen sowie anhand der Zeichnung; im Einzelnen zeigen die Zeichnungen in:

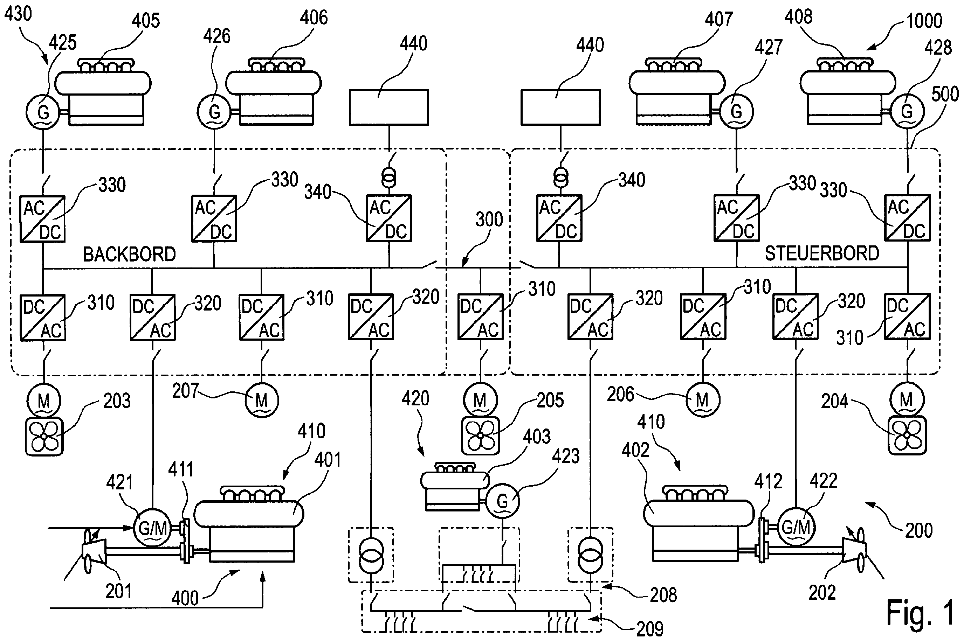

Fig. 1 eine schematische Darstellung einer bevorzugten Ausführungsform eines Brennkraftmaschinen-Generator-Systems für eine Megayacht, das eine Anzahl von über Wechselrichter an ein Verteilernetz anschließbare, elektrische Leistung generierende Brennkraftmaschinen-Generator-Einheiten unterschiedlicher Art aufweist und das ebenfalls über Wechselrichter an das Verteilernetz anschließbare elektrische Leistung verbrauchende unterschiedliche Lastverbraucher aufweist - vorliegend weist jede Einheit eine drehzahlvariable Brennkraftmaschine und einen Generator auf;

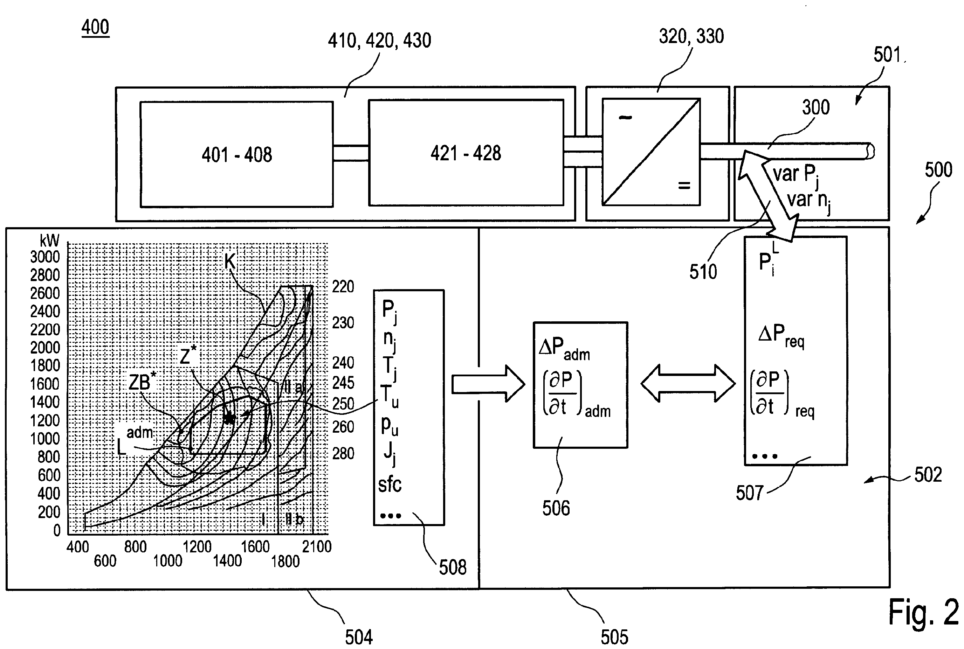

Fig. 2 eine schematische Darstellung des grundsätzlichen Konzepts einer bevorzugten Ausführungsform des Steuer- und Regelverfahrens für das Brennkraftmaschinen-Generator-System, wie beispielsweise das in Fig. 1, unter schematischer Darstellung einer Brennkraftmaschinen-Generator-Einheit sowie einer ersten und zweiten Teilregelung, wobei der Betriebszustands Z* und das Lastaufschaltvermögen L^{adm} einer Brennkraftmaschinen-Generator-Einheit im Rahmen eines Rechenmodells abgeleitet werden und bevorzugte Parameter zur Charakterisierung des Lastaufschaltvermögens L^{adm} mit bevorzugten Parametern zur Charakterisierung der Lastanforderung der Anzahl von Lastverbrauchern verglichen werden;

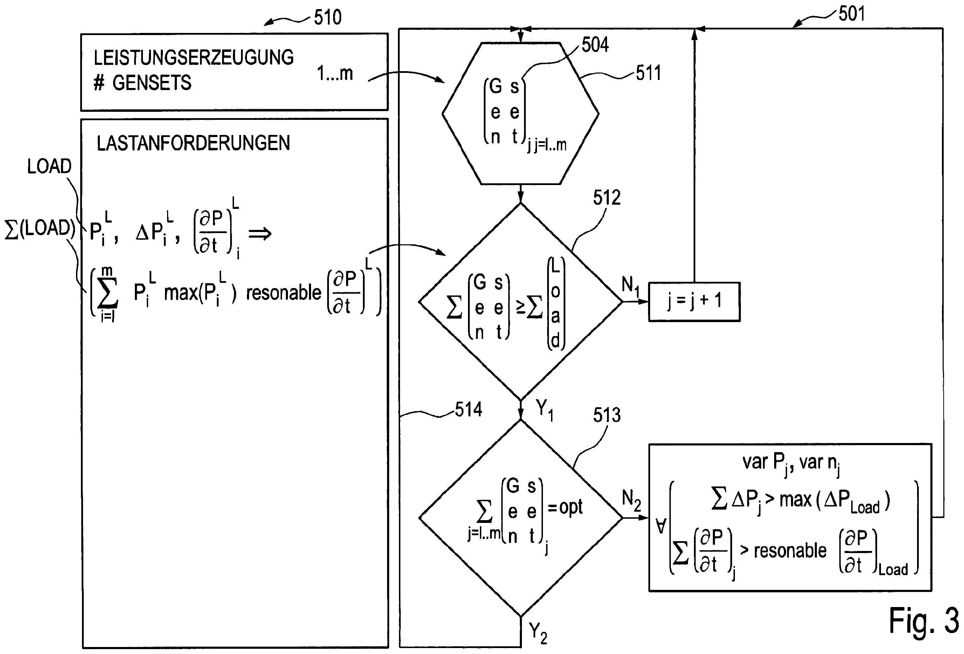

Fig. 3 für die bevorzugte Ausführungsform der Fig. 2 eine schematische Darstellung einer Regelschleife für eine erste das System betreffende übergeordnete Teilregelung zur Bestimmung der Anzahl von anzuschließenden Brennkraftmaschinen-Generator-Einheiten sowie der variablen Lastverteilung und Drehzahlverteilung;

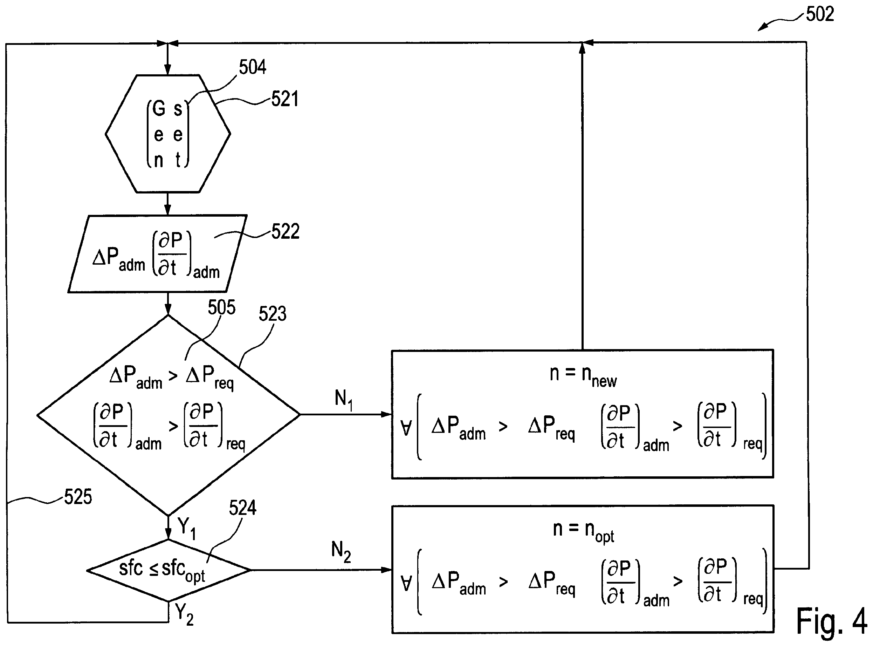

Fig. 4 für die bevorzugte Ausführungsform der Fig. 2 eine schematische Darstellung einer Regelschleife für eine zweiten, die drehzahlvariable Brennkraftmaschine betreffende Teilregelung insbesondere zum Vergleichen des Lastaufschaltvermögens mit der lastanforderungsabhängigen variablen Lastverteilung und einer davon abhängigen Anpassung der Drehzahl der Brennkraftmaschine.

Fig. 1 zeigt exemplarisch ein Brennkraftmaschinen-Generator-System 1000 für eine Megayacht, das zum Antrieb derselben ausgelegt ist. Als Leistung verbrauchende Lastverbraucher --die im folgenden insgesamt grundsätzlich mit 200 bezeichnet sind-- sind am Verteilernetz 300 des Systems 1000 mehrere Propeller angeschlossen, nämlich ein backbordseitiger Hauptpropeller 201, ein steuerbordseitiger Hauptpropeller 202 sowie ein backbordseitiger Propeller 203 für ein Bugstrahlruder und ein steuerbordseitiger Propeller 204 für ein Bugstrahlruder sowie ein Propeller 205 für ein Heckstrahlruder. Außerdem sind Antriebe 206, 207 für eine steuerbordseitige Kühlanlage und eine backbordseitige Kühlanlage als weitere Lastverbraucher 200 vorgesehen. Die vorgenannten Lastverbraucher 200 sind über Wechselrichter 310 (DC/AC -Wandler) an das Verteilernetz 300 anschließbar, welche einen im Verteilernetz üblicherweise über eine Gleichstromschiene zur Verfügung stehenden Gleichstrom in einen Wechselstrom gewünschter Frequenz transformieren. Das zuvor Ausgeführte gilt grundsätzlich auch für die über Wechselrichter 320 (DC/AC -Wandler) an das Verteilernetz 300 angeschlossenen Lastverbraucher 200 in Form des backbordseitigen Hauptpropellers 201 des steuerbordseitigen Hauptpropellers 302 und mit Einschränkung auch für die Notstromanlage 208 mit Bordnetz 209. Die speziellen Anforderungen und Normen unterliegende Notstromanlage 208 mit Brennkraftmaschinen-Generator-Einheit 403 und Generator 423 wird grundsätzlich als "Stand-Alone"-System betrieben und ist daher grundsätzlich nur bedingt Teil des nachfolgend beschriebenen Steuer- und Regelverfahrens.

Darüber hinaus sind die Lastverbraucher 200 direkt über eine separate Brennkraftmaschinen-Generator-Einheit --wie die anderen auch in Form eines Stromerzeugungsaggregats mit Dieselmotor-- antreibbar. Dazu werden im Folgenden die Anzahl von an das Verteilernetz 300 über die Wechselrichter 320 an das Verteilernetz 300 anschließbaren Brennkraftmaschinen-Generator-Einheiten 400 im Einzelnen beschrieben. Dazu gehören insbesondere die backbordseitige Brennkraftmaschinen-Generator-Einheit 401 und die steuerbordseitige Brennkraftmaschinen-Generator-Einheit 402, welche den Hauptantrieb für die Hauptpropeller 201, 202 bilden. Ein Hauptpropeller 201, 202 ist dabei an eine den Hauptantrieb bildende Brennkraftmaschinen-Generator-Einheit 401, 402 über ein Sammelgetriebe 411, 412 an einen zugeordneten Generator 421, 422 gekoppelt. Demzufolge kann beim Betrieb einer Diesel-Brennkraftmaschine 401, 402 dieselbe zur alleinigen Stromerzeugung dienen, wenn deren über den Generator 421, 422 generierte Leistung über den Wechselrichter 320 in das Verteilernetz eingespeist wird. Mittels dem Sammelgetriebe 411, 412 kann ein Propeller 201, 202 auch direkt über eine Diesel-Brennkraftmaschine 401, 402 rein mechanisch oder kombiniert elektromechanisch angetrieben werden. Die Brennkraftmaschinen-Generator-Einheit 401, 402 arbeitet als reiner Stromerzeuger, wenn die Diesel-Brennkraftmaschine 401, 402 ohne Antrieb des Propellers 201, 202 als elektrische Maschine lediglich den Generator antreibt und Strom erzeugt, der in das Verteilernetz 300 über die Wechselrichter 320 eingespeist werden kann.

Die Diesel-Brennkraftmaschine 403 der oben genannten Notstromanlage 208 treibt einen Generator 423 an, so dass die aus Diesel-Brennkraftmaschine 403 und Generator 423 gebildete Brennkraftmaschinen-Generator-Einheit 420 als Notstromaggregat für das Bordnetz 209 der Megayacht dient. Vorliegend sind die vorgenannten Brennkraftmaschinen-Generator-Einheiten 400 bereits für unterschiedliche Nennleistungen bei geeigneten Drehzahlen ausgelegt. So dient eine Brennkraftmaschine 401, 402 eines Hauptantriebs zur Erzeugung einer Nennleistung von etwa 3500 kW bei etwa 2050 U/min während die das Notstromaggregat versorgende Diesel-Brennkraftmaschine 403 ausgelegt ist, etwa 730 kW bei ca. 1500 U/min zu erzeugen. An das Verteilernetz 300 sind vorliegend weitere (hier vier) im oberen Bereich gezeigte Brennkraftmaschinen-Generator-Einheiten als Kombination einer Diesel-Brennkraftmaschine 405, 406, 407, 408 mit jeweils einem Generator 425, 426, 427, 428 über Gleichrichter 330 (AC/DC -Wandler) angeschlossen. Zwar sind die Gleichrichter-330 vorliegend getrennt gezeigt, jedoch können diese im Rahmen einer Abwandlung für den Betrieb des jeweiligen Generators 425, 426, 427, 428 einer Brennkraftmaschinen-Generator-Einheit 430 als Aggregat notwendig sein und gehören dann zum Aggregat dazu. Dies kann z. B. die Bereitstellung der Erregung und des Blindleistungsbedarfs des Generators z. B. bei Asynchronmaschinen oder bei hybriderregten Permanentmagnet-Synchronmaschinen betreffen.

Die gezeigten Brennkraftmaschinen der Aggregate sind für eine Leistung von etwa 2880 kW bei ca. 2050 U/min ausgelegt. An das Verteilernetz 300 sind vorliegend also wenigstens drei Gruppen von Brennkraftmaschinen-Generator-Einheiten 410, 420, 430 unterschiedlicher Nennleistung und Nenndrehzahl über jeweils nicht bezeichnete Schalter anschließbar.
Der als Notgenerator dienende Generator 423 der Brennkraftmaschinen-Generator-Einheiten 420 wird jedoch nur in Ausnahmesituationen, d.h. praktisch nicht, an das Verteilernetz 300 angeschlossen. Die vorliegend erläuterte Schaltung der Fig.1 lässt das zwar theoretisch zu, aber ein Parallelbetrieb von Notgenerator der Brennkraftmaschinen-Generator-Einheit 420 und der Hauptgeneratoren der Brennkraftmaschinen-Generator-Einheiten 410, 430 wird praktisch nur für eine Rücksynchronisierung vorgesehen.

Darüber hinaus sind an das Verteilernetz 300 Landanschlüsse 440 über weitere Gleichrichter 340 zur Einspeisung von elektrischer Leistung anschließbar.

Insgesamt ist in Fig. 1 ein vergleichsweise komplexes Brennkraftmaschinen-Generator-System 1000 mit einer Anzahl von an ein Verteilernetz 300 anschließbaren Leistung generierenden Brennkraftmaschinen-Generator-Einheiten 410, 420, 430 -hier in Form von Dieselmotor-Generatoreinheiten- zur Bildung eines Stromerzeugungsaggregats und/oder elektromechanischen Antriebs angeschlossen. Außerdem ist an das Verteilernetz 300 eine Anzahl Leistung verbrauchender Lastverbrauchern 200 angeschlossen. Eine vorgenannte Einheit 410, 420, 430 weist vorliegend unterschiedliche Brennkraftmaschinen 401, 402, 403 und 405 - 408 in Kombination mit jeweils einem Generator 421, 422, 423 und 425 - 428 auf.

Bei allen beschriebenen Brennkraftmaschinen (ggfs. ausgenommen dem Notstromaggregat 420) handelt es sich um Dieselmotoren, die als drehzahlvariable Dieselmotoren ausgelegt sind und die damit leistungselektronisch geregelt werden.

In Bezug auf die folgenden Fig. 2 bis Fig. 4 wird eine Steuer- und Regeleinheit in Zusammenhang mit einem Verfahren zur Steuerung und Regelung gemäß dem Konzept der Erfindung im Rahmen einer besonders bevorzugten Ausführungsform beschrieben.

Das Konzept der Erfindung ist dazu grundsätzlich anhand von Fig. 2 erläutert anhand einer exemplarisch dargestellten Diesel-Brennkraftmaschinen-Generator-Einheit 400 als Teil des Brennkraftmaschinen-Generator-Systems 1000. Die Einheit 400 weist eine der Diesel-Brennkraftmaschinen 401 - 408 als Brennkraftmaschine auf und einen der Generatoren 421 - 428 als Generator auf und die Einheit 400 ist über einen Wechselrichter 320 bzw. Gleichrichter 330 an das Verteilernetz 300 angeschlossen.

Zugriff auf das Verteilernetz hat auch eine Steuer- und Regeleinrichtung 500 mit einer ersten Teilregelung 501 und einer zweiten Teilregelung 502, die anhand Fig. 3 weiter erläutert ist. Die in Fig. 3 näher gezeigte erste Teilregelung 501 ist eine übergeordnete Teilregelung und betrifft eine Systemebene, d. h. hier werden die grundsätzlichen Regelgrößen, nämlich vorliegend die Anzahl von an das Verteilernetz 300 anzuschließenden Brennkraftmaschinen-Generator-Einheiten 410, 430 in Abhängigkeit des Lastanforderungsumfangs und die variable Last- und Drehzahlverteilung geregelt.

Die in Fig. 4 näher erläuterte zweite Teilregelung 502 auf Dieselmotorenebene umfasst einen digitalen Signalprozessor zur Darstellung eines die Diesel-Brennkraftmaschine 401 bis 408 darstellenden Rechenmodells 504 und einen Komparator 505 zur Durchführung von Vergleichsabfragen zwischen Parametern eines Lastaufschaltvermögens 506 und Parametern einer lastanforderungsumfangsabhängigen variablen Lastverteilung 507. Daraus gewonnene Stellwerte und Größen 508 zur Beschreibung eines Betriebszustandes Z*, nämlich hier insbesondere eine Drehzahl nⱼ und eine variable Leistung Pⱼ werden über eine Schnittstelle 510 der ersten Teilregelung 501 zur Verfügung gestellt. Die Schnittstelle 510 bildet gleichzeitig eine Schnittstelle zum Verteilernetz 300, dem alle Leistungs- und Laständerungen zur Verfügung stehen.

Vorliegend besitzt jeder der Dieselmotoren 401, 402, und 403 -408 eine zweite Teilregelung 502 mit einem digitalen Signalprozessor zur Darstellung des Rechenmodells 504. Die zweite Teilregelung 502 implementiert insofern einen modellbasierten Regler, der aus einem aktuellen in einem Kennlinienfeld K bestimmten aktuellen Betriebszustand Z* mögliche Laständerungen innerhalb eines Betriebszustandsbereichs ZB*, die der Motor übernehmen kann, berechnet. In der Darstellung der Fig. 2 wird angenommen, dass der Motor aktuell im Kennfeld am Betriebszustand Z* bei der Leistung Pⱼ der Brennkraftmaschine, der Drehzahl nⱼ der Brennkraftmaschine betrieben wird. Ein Vektor aus diversen Größen 508 --wie beispielsweise der Betriebstemperatur Motors Tⱼ, der Umgebungstemperatur Tᵤ, dem Luftdruck pᵤ und dem Trägheitsmoment J sowie dem spezifischen Kraftstoffverbrauch "sfc" der Brennkraftmaschinen-Generator-Einheit 410, 420, 430 oder weiteren optimierbaren Parametern "..." wie z. B. einem Abgasgegendruck p_{AG}-- bestimmt dabei maßgeblich die zulässigen transienten Laständerungen L^{adm} innerhalb des Betriebszustandsbereichs ZB*, die der Motor mit ausreichender Reserve übernehmen kann. Das sogenannte Lastaufschaltvermögen 506 wird vorliegend charakterisiert durch einen Betrag eines zulässigen Leistungssprungs ΔPⱼ^{adm} in Bezug auf den aktuellen Betriebszustand Z* und eine zulässige Leistungsrampe δPᵢ^{adm} in Bezug auf den aktuellen Betriebszustand Z*. In dem thermodynamischen Rechenmodell 504 sind die Grenzen dieses zulässigen Lastaufschaltvermögens L^{adm} als mit dicker Umrandung versehener Parameterbereich dargestellt. Der digitale Signalprozessor der ersten Teilregelung 502 bestimmt insofern durch Simulation des transienten Verhaltens eines Motors--d. h. des Dieselmotors jedenfalls der Brennkraftmaschinen 401, 402 und 405 -408-- einen aktuellen Betriebszustand Z* und leitet daraus ein zulässiges Lastaufschaltvermögen L^{adm} in Abhängigkeit vom aktuellen Betriebszustand Z* ab, das maximal dem Betriebszustandsbereich ZB* entspricht. Die vorgenannten Größen 508 stellen eine nicht abschließende Aufzählung von den Betriebszustand Z* bzw. den Betriebszustandsbereich ZB* bzw. das zulässige Lastaufschaltvermögen L^{adm} definierende Größen dar. Je nach Rechenaufwand und Erforderlichkeit kann eine mehr oder weniger große Anzahl von Größen 508 gewählt werden, um die Beschreibung eines Motors im Rechenmodell ausreichend zu gestalten. Das Rechenmodell auf dem digitalen Signalprozessor kann beispielsweise im Dieselmotor selbst integriert sein. Es kann auch in einem externen Rechner ausgeführt werden und der Steuer- und Regeleinrichtung 500 zur Verfügung gestellt werden.

Die zulässigen Laständerungen im Rahmen eines Lastaufschaltvermögens 506 müssen dem Rahmen der für Drehzahlen und Lastverteilungen angeforderten Lastparameter an der Schnittstelle 510 zum Verteilernetz 300 bzw. zur ersten Teilregelung 501 entsprechen. Vorliegend ist die Lastanforderung und die damit zusammenhängende Lastverteiung 507 der Lastverbraucher 201, 202, 203, 204, 205, 206, 207 und ggfs. 208 , 209 bestimmt durch entsprechende Wirklasten Pᵢ^{L} Lastsprünge ΔPᵢ^{L} und Lastrampen δPᵢ^{l}. Diese werden im Rahmen der ersten Teilregelung 501 umgesetzt in angeforderte Lasten eines Lastanforderungsumfang ΔP^{req} und δP^{req}.

Im Ergebnis kann somit durch das der Regelung hinterlegte Rechenmodell 504 mit Kennlinien K des Dieselmotors der aktuelle Zustand Z* und damit sein Vermögen Laständerungen zu übernehmen, jederzeit online und in Echtzeit berechnet werden. Dies ermöglicht es, den Dieselmotor abhängig von den erwarteten Laständerungen in einen optimalen Betriebspunkt zu steuern. Bei Brennkraftmaschinen-Generator-Einheiten variabler Drehzahl --wie im vorliegenden Fall jedenfalls die Einheiten 410, 430, ggfs. auch 420-kann dieselbe Leistung bei verschiedenen Drehzahlen bereitgestellt werden, was zum Teil erheblichen Einfluss auf den Kraftstoffverbrauch und das Lastaufschaltvermögen hat. Bei bekannten maximal auftretenden Lastsprüngen ΔP_{eq} und Lastrampen δP_{req} kann mit Hilfe des Rechenmodells 504 ein Leistungs- und Drehzahlbereich für eine Lastaufschaltvermögen L^{adm} berechnet werden, der zum einen einen sicheren Betrieb gewährleistet, da er innerhalb des möglichen Betriebszustandsbereich ZB* liegt. Zum anderen kann innerhalb dieses zulässigen Lastaufschaltvermögens L^{adm} ein optimaler Betriebspunkt gegebenenfalls abhängig von einer gewählten Optimierungsstrategie bestimmt werden. Da sowohl die maximale Laständerung vom aktuellen Betrieb abhängt als auch das Lastaufnahmevermögen des Dieselmotors von den aktuellen Betriebsbedingungen, wird die Regelung 500 mit dem Rechenmodell 504 in einem Regelkreis kontinuierlich durchgeführt. Dies wird anhand der folgenden Fig. 3 und Fig. 4 erläutert.

Fig. 3 zeigt den Aufbau einer ersten das System 1000 betreffenden übergeordneten ersten Teilregelung mit Regel- und Prozessormitteln.

Die in Fig. 2 beschriebene Schnittstelle 510 stellt zunächst --als wesentliche Angabe zur Leistungserzeugung-- die Anzahl von verfügbaren Brennkraftmaschinengeneratoreinheiten 400 zur Verfügung, die im Folgenden auch als #GENSETS bezeichnet ist. Vorliegend handelt es sich dabei um die in Fig. 1 bezeichneten Gensets mit den Brennkraftmaschinen der Einheiten 410, und 430; vorliegend ist dies eine Anzahl von sechs Gensets. Des Weiteren steht an der Schnittstelle 510 eine Information zu möglichen Lastanforderungen der Lastverbraucher zur Verfügung. Dabei kommen die anhand von Fig. 1 bezeichneten Lastverbraucher, --insbesondere die Propeller 201, 202, 203, 204, 205 sowie die weiteren Lastverbraucher 207 bis 209-- zum Einsatz. Die Lastanforderungen werden im Rahmen eines Lastanforderungsumfangs für jeden Lastverbraucher beschrieben. Dies ist vorliegend eine Wirklast Pᵢ, ein Lastsprung ΔPᵢ^{l} und eine Lastrampe δPᵢ^{l}. Die in die Schnittstelle 510 eingreifende erste Teilregelung 501 ermittelt daraus einen Lastanforderungsumfang, der vorliegend mit vergleichsweise wenig Aufwand bestimmt ist durch die Summe der Wirklasten Pᵢ^{l} einem Maximum der Lastsprünge ΔPᵢ^{l} und einem übergeordneten Wert der Lastrampen δPᵢ^{resbl}. Letzterer kann beispielsweise ebenfalls als Maximalwertbildung erfolgen oder als ein oberer Grenzwert oder oberer Mittelwert aller Lastrampen.

In der ersten Teilregelung 501 selbst wird dann zunächst in einem Schritt 511 aufgrund des Rechenmodells 504 die Betriebszustände Z* und die diese beschreibenden Zustandsgrößen 508 bzw. der mögliche Betriebszustandsbereich ZB* zur Verfügung gestellt. Diese Informationen ermöglichen grundsätzlich die Angabe von in einem transienten Betriebszustand zur Verfügung stehender Leistungen sowie aller Lastaufschaltvermögen der Anzahl von zur Verfügung stehenden Brennkraftmaschinen auf Grundlage des Rechenmodells 504. In einem Schritt 512 wird verglichen, ob die Summe aller Lastaufschaltvermögen und zur Verfügung stehenden Leistungen der Brennkraftmaschinen größer ist als der Lastanforderungsumfang der Anzahl von Lastverbrauchern wie er über die Schnittstelle 510 der ersten Teilregelung zur Verfügung gestellt ist. Für den Fall, dass dies nicht zutrifft, wird in einem N₁-Zweig der ersten Teilregelung 501 die Anzahl #GENSET der Gensets um "1" erhöht und die Schritte 511 und 512 von Neuem durchgeführt bis die zuvor beschriebene Bedingung im Schritt 512 erfüllt ist. In einem Schritt Y1 wird sodann geprüft, ob die über verfügbare Gensets zur Verfügung stehenden Zustandsgrößen optimiert sind. Dies ist nicht der Fall, wenn die im zweiten N₂-Zweig der ersten Teilregelung genannte summarische Randbedingung nicht erfüllt ist. Konkret wird geprüft, ob die Summe aller einzelnen möglichen Leistungssprünge ΔPⱼ größer ist als ein Maximum der Lastsprünge für das System 1000. Es wird auch geprüft, ob das Maximum aller einzelnen möglichen Leistungsrampen δPⱼ als ein übergeordneter Wert der für das System 1000 zu erwartenden Lastrampen δPᵢ representativ ist oder ob ein angemessen entsprechend größerer Wert verwendet werden muss. Die variable Last- und Drehzahlverteilung var (Pⱼ) var (nⱼ) einer angeforderten Last- und Drehzahlverteilung für ein einzelnes Genset wird im N₂-Zweig der ersten Teilregelung 501 solange angepasst, bis diese summarische Randbedingung erfüllt ist. Im Ergebnis führt dies dazu, dass auf Systemebene das System 1000 in der Lage ist, jeden vernünftig zu erratenden Lastsprung bzw. jede vernünftig zu erwartende Lastrampe der Lastverbraucher auch im transienten Betrieb zu erfüllen. Insbesondere werden in einem Y₂-Zweig der ersten Teilregelung 501 die vorgenannten Schritte 511 (Bestimmen des Betriebszustands Z* und Betriebszustandsbereich ZB*), 512 (Bestimmen der Anzahl von anzuschließenden Einheiten 400), 513 (Optimieren hinsichtlich der summarischen Randbedingung) kontinuierlich, d.h. "in the loop", durchgeführt. Sowohl eine maximale Laständerung MAX(ΔP^{l}) als auch das Lastaufnahmevermögen ZB* hängt vom aktuellen Betriebszustand Z* ab. Durch die kontinuierliche Betriebsweise ist sichergestellt, dass sich auf übergeordneter Regelebene für das System 1000 des Brennkraftmaschinengeneratorsystems in einem sicheren und gleichzeitig optimalen Betriebszustand befindet.

Die im N₂-Zweig definierte, in Fig. 3 gezeigte, summarische Randbedingung hat einen auf die angeforderte Einheit 400 bezogenen Betrag einer variablen Lastverteilung var^{P}ⱼ in Bezug auf den aktuellen Betriebszustand Z* und variable Drehzahlverteilung nⱼ zur Folge. Diese als angeforderter Lastsprung ΔPⱼ^{req} und angeforderte Lastrampe δPⱼ^{req} bezeichneten lastanforderungsumfangsabhängigen variablen Lastverteilungen für eine einzelne Brennkraftmaschine 400 werden der in Fig. 4 näher beschriebenen zweiten Teilregelung 502 zur Verfügung gestellt.

Wie in Fig. 4 dargestellt hat im Schritt 521 die zweite, die drehzahlvariable Brennkraftmaschine betreffende, Teilregelung 502 auch die Ergebnisse des Rechenmodells 504 zur Verfügung, nämlich den Betriebszustand Z* und den Betriebszustandsbereich ZB*.

Wie anhand von Fig. 2 erläutert lässt sich aus dem Betriebszustandsbereich ZB* ein darin liegender zulässiger Bereich eines Lastaufschaltvermögens L^{adm} angeben. Vorliegend ist dieser definiert durch einen zulässigen Leistungssprung ΔPⱼ^{adm} und eine zulässige Leistungsrampe δPⱼ^{adm} in Bezug auf den aktuellen Betriebszustand Z*; diese Festlegung gilt auch in einem transienten Betrieb der Brennkraftmaschine 400, was im Schritt 522 für die zweite Teilregelung in Fig. 4 dargestellt ist. Im Schritt 523 der zweiten Teilregelung 502 werden die vorgenannten Parameter des zulässigen Lastaufschaltvermögens ΔP_{adm}, δP_{adm} verglichen mit der lastanforderungsumfangsabhängigen variablen Parametern der Lastverteilung ΔP_{req} δP_{req}. Für den Fall, dass die Werte für die angeforderte Last nicht innerhalb des zulässigen Lastaufschaltvermögens L^{adm} liegt, wird in einem ersten N₁-Zweig der zweiten Teilregelung 502 eine Drehzahl n_{new} der Brennkraftmaschine unter Wiederholung der vorgenannten Schritte 521, 522, 523 solange angepasst, bis die in Schritt 523 aufgeführte Bedingung erfüllt ist. Ist dies der Fall, kann davon ausgegangen werden, dass jedenfalls hinsichtlich der Lastanforderung und des verfügbaren Lastaufschaltvermögens der Brennkraftmaschine der Betriebszustand Z* der Brennkraftmaschine sicher gewählt ist.

In einem Zweig Y1 wird in der zweiten Teilregelung 502 dann geprüft, ob alle optimierbaren Zustandsgrößen der Brennkraftmaschine einer weiteren Randbedingung genügen. Beispielsweise kann eine Optimierungsstrategie darin bestehen, einen möglichst geringen Kraftstoffverbrauch bei der Brennkraftmaschine zu fahren. In dem Fall besteht eine Optimierungsgröße darin, die Brennkraftmaschine in einem Bereich mit möglichst geringem spezifischem Verbrauch zu betreiben (sfc möglichst gering). Sollte die bislang gewählte Drehzahl n_{new} den optimierten Anforderungen noch nicht genügen, wird in einem zweiten N₂-Zweig der zweiten Teilregelung die Drehzahl n solange optimiert, bis sie einer optimalen Drehzahl nₒₚₜ entspricht, wobei dennoch die im Schritt 523 genannte Bedingung erfüllt sein muss. D. h. auch bei optimierter Drehzahl sollte die der zweiten Teilregelung 502 unterliegende Brennkraftmaschine ein Lastaufschaltvermögen haben, das größer als die lastanforderungsabhängige variable Lastverteilung für die Brennkraftmaschine ist.

Liegt eine optimierte Drehzahl nₒₚₜ für die Brennkraftmaschine vor, wird die zweite Teilregelung in einem zweiten Y₂-Zweig kontinuierlich "in the loop" weiterbetrieben, indem die vorgenannten Schritte 521 bis 524 wiederholt werden. Die Wiederholungsrate der Schritte 521 bis 524 kann entsprechend der Dynamik des transienten Zustands der Brennkraftmaschine gewählt werden, so dass sichergestellt ist, dass sowohl bei schnellen als auch langsamen dynamischen transienten Zustandsänderungen die vorgenannten sicheren und optimalen Betriebsbedingungen der Brennkraftmaschine erfüllt sind.

Insbesondere wird bei Durchführung der zweiten Teilregelung 502 der Betriebszustand Z* und der Betriebszustandsbereich ZB* aus dem Schritt 521 für die Brennkraftmaschine an den Schritt 511 der ersten Teilregelung 501 übermittelt, so dass die übergeordnete erste Teilregelung 501 gegebenenfalls Leistungsanforderungen neu festlegen kann und diese unter Rückkopplung im Schritt 523 der zweiten Teilregelung 502 einspeisen kann. Im Normalfall eines Defizits auf der Erzeugerseite wird, wie erläutert, entweder ein weiteres Aggregat gestartet im Rahmen des N₁-Zweigs der ersten Teilregelung 501. Andernfalls,falls beispielsweise bereits alle Aggregate gestartet sind-- müssen die im Betrieb befindlichen Aggregate in Betriebspunkte Z* gefahren werden, sodass die möglicherweise geforderte Laständerung des Schritts 523 der zweiten Teilregelung 502 gefahren werden kann.

Für den Fall, dass das Durchführen des N₁-Zweigs der zweiten Teilregelung 502 zu keinem schlüssigen Ergebnis führt, muss davon ausgegangen werden, dass die angeforderte Leistung nicht erbracht werden kann. Um diese Feststellung treffen zu können, können weitere Prüfungen erforderlich sein, so dass es nur im Ausnahmefall und als letzte Möglichkeit in Betracht kommt, einen Lastabwurf zuzulassen, der ein Abschalten von unwichtigen Verbrauchern bezogen auf die akute Fahrsituation der Megayacht vorsehen kann. Dies kann beispielsweise das Abschalten der Verbraucher an den Wechselrichtern 310 umfassen. Dies kann beispielsweise auch ein Abschalten von Verbrauchern an den Wechselrichter 320 umfassen. In einem Zusatz oder einer Alternative kann auch ein Start von weiteren Verbrauchern gesperrt werden.

Die vorliegende Ausführungsform sieht auch ein Fehlerszenario vor, bei dem im Fehlerfall die sonst als drehzahlvariable Dieselmotoren betrachteten Brennkraftmaschinen 401 bis 408 (außer ggfs. 403) als drehzahlkonstante Motoren betrieben werden, wie dies bei konventionellen Gensets der Fall ist.

Insgesamt bietet das vorliegende Verfahren den Vorteil, dass --wenn überhaupt-- nur ein gezielter Lastabwurf von mehr oder weniger kritischen Verbrauchern erforderlich ist, da im Rahmen des Rechenmodells 504 und der Verfahrensschritte 511 und 521 eine ständige Simulation auch eines transienten Zustands der Dieselbrennkraftmaschine umgesetzt wird.

### Bezugszeichen

- 200: Lastverbraucher
- 300: Verteilernetz
- 1000: System
- 201: backbordseitiger Hauptpropeller
- 202: steuerbordseitiger Hauptpropeller
- 203: backbordseitiger Propeller
- 204: steuerbordseitiger Propeller
- 206, 207: Antriebe
- 208: Notstromaggregat
- 209: Bordnetz
- 310, 320: Wechselrichter
- 330, 340: Gleichrichter
- 400: Brennkraftmaschinen-Generator-Einheiten
- 401: backbordseitige Brennkraftmaschinengeneratoreinheit
- 402: steuerbordseitige Brennkraftmaschinengeneratoreinheit
- 403: Dieselbrennkraftmaschine für ein Notstromaggregat
- 405, 406, 407, 408: Dieselbrennkraftmaschine
- 411, 412: Sammelgetriebe
- 421, 422, 423, 425, 426, 427, 428: Generator
- 410, 420, 430: Brennkraftmaschinengeneratoreinheit
- 440: Landanschlüsse
- 500: Steuer- und Regeleinrichtung
- 501: erste Teilregelung
- 502: zweite Teilregelung
- 504: Rechenmodell
- 505: Komparator
- 506: Lastaufschaltvermögen
- 507: lastanforderungsumfangsabhängige variable Lastverteilung
- 510: Schnittstelle
- K: Kennlinienfeld
- P: Wirklasten
- ΔPⱼ^{req}, dPⱼ^{req}: angeforderte Lastsprünge und Lastrampen
- ΔPⱼ^{adm}, dPⱼ^{adm}: zulässige Leistungssprünge und Leistungsrampen
- L^{adm}: Lastaufschaltvermögen
- L^{req}: geforderte Lastaufschaltung, die auf die einzelnen Aggregate verteilt werden muss.
- n^{req}: Drehzahlverteilung
- #GENSET: Anzahl von anzuschließenden Brennkraftmaschinen-Generator-Einheiten 400
- SUM (GENSET): Leistungssumme der Brennkraftmaschinen-Generator-Einheiten 400
- SUM (LOAD): Lastsumme der Verbraucher
- 514, 525: Regelschleife
- P_{j, nj}, Tⱼ: Leistung, Drehzahl, Temperatur einer Brennkraftmaschine
- Tᵤ, pᵤ: Umgebungstemperatur, Umgebungsdruck
- p_{AG}: Abgasgegendruck
- Jⱼ: Trägheitsmoment einer Einheit 400
- sfc: spezifischer Kraftstoffverbrauch
- Z*: aktueller Betriebszustand
- ZB*: Betriebszustandsbereich für ein Lastaufschaltvermögen L^{adm}

## Patentansprüche

1. Verfahren zur Steuerung und Regelung eines Brennkraftmaschinen-Generator-Systems (1000) mit einer Anzahl von an ein Verteilernetz anschließbaren, elektrische Leistung generierenden Brennkraftmaschinen-Generator-Einheiten (400) und elektrische Leistung verbrauchenden Lastverbrauchern (200), wobei eine Einheit (400) eine drehzahlvariable Brennkraftmaschine (401, 402, 404 - 408) und einen Generator (421 - 428) aufweist, umfassend die Schritte:
(a) Bestimmen eines aktuellen Betriebszustands (Z*) der Brennkraftmaschine (401, 402, 404 - 408) der wenigstens einen Brennkraftmaschinen-Generator-Einheit (400); und
(b) Ableiten eines ein Lastaufschaltvermögen (L^{adm}) beschreibenden Betriebszustandsbereichs (ZB*) in Abhängigkeit vom aktuellen Betriebszustand (Z*) für die Brennkraftmaschine der wenigstens einen Brennkraftmaschinen-Generator-Einheit (400), wobei
das Bestimmen des aktuellen Betriebszustands (Z*) und das Ableiten des Betriebszustandsbereichs (ZB*) auf Grundlage eines Rechenmodells (504) für die Brennkraftmaschine (401, 402, 405 - 408) erfolgt;
(c) Bereitstellen eines mögliche Lastanforderungen der Anzahl von Lastverbrauchern (200) beschreibenden Lastanforderungsumfangs; und **dadurch gekennzeichnet, dass**
(d) unter Berücksichtigung des aktuellen Betriebszustands (Z*) und des Lastaufschaltvermögens (L^{adm}) der Brennkraftmaschine (401, 402, 404 - 408) der wenigstens einen Brennkraftmaschinen-Generator-Einheit (400):
- Bestimmen einer Anzahl (#GENSET) von an das Verteilernetz anzuschließenden Brennkraftmaschinen-Generator-Einheiten (400) in Abhängigkeit des Lastanforderungsumfangs; und
- Bestimmen einer variablen Lastverteilung (L^{req}) und/oder einer variablen Drehzahlverteilung (n^{req}) für die Anzahl Brennkraftmaschinen (400) in Abhängigkeit von dem Lastanforderungsumfang.

2. Verfahren nach Anspruch 1, **dadurch gekennzeichnet, dass** beim Ableiten des Betriebszustandsbereichs (ZB*) ein zulässiger Betriebsbereich eines Generators der Brennkraftmaschinen-Generator-Einheit (400), insbesondere hinsichtlich Drehzahl, Erregung und/oder Spannung, berücksichtigt wird.

3. Verfahren nach Anspruch 1 oder 2, **dadurch gekennzeichnet, dass**
die Schritte (c) und/oder (d) in einer ersten übergeordneten Teilregelung (501), und die Schritte (a) und (b) in einer zweiten Teilregelung (502) durchgeführt werden.

4. Verfahren nach Anspruch 3, **dadurch gekennzeichnet, dass** die erste übergeordnete Teilregelung (501) das System betrifft und/oder die zweite Teilregelung (502) die drehzahlvariable Brennkraftmaschine (401, 402, 404 - 408) betrifft.

5. Verfahren nach einem der Ansprüche 1 bis 4, **dadurch gekennzeichnet, dass**
ein Lastaufschaltvermögen (L^{adm}) an einem aktuellen Betriebszustand (Z*) **gekennzeichnet ist durch** einen möglichen oder zulässigen Leistungssprung (ΔPⱼ)^{adm} und eine mögliche oder zulässige Leistungsrampe (δPi)^{adm,} und/oder eine mögliche Lastanforderung des wenigstens einen Lastverbrauchers (200) bestimmt ist durch eine Wirklast (Pᵢ), einen Lastsprung (ΔPᵢ) und/oder eine Lastrampe (δPᵢ).

6. Verfahren nach einem der Ansprüche 1 bis 5, weiter aufweisend den Schritt:
e) Vergleichen des Lastaufschaltvermögens (L^{adm}) mit der lastanforderungsumfangsabhängigen variablen Lastverteilung (L^{req}) für die Brennkraftmaschine (400), insbesondere in einer zweiten, die drehzahlvariable Brennkraftmaschine (400) betreffenden Teilregelung (502).

7. Verfahren nach einem der Ansprüche 1 bis 6, **dadurch gekennzeichnet, dass**
die variable Lastverteilung (L^{req}) und/oder die Drehzahlverteilung (n^{req}) einer summarischen Randbedingung unterworfen wird, wobei die Summe aller Lastaufschaltvermögen (L^{adm}) der Brennkraftmaschinen auf Grundlage des RechenModells (504) für die wenigstens eine Brennkraftmaschine (400) größer als der Lastanforderungsumfang der Anzahl von Lastverbrauchern (200) ist.

8. Verfahren nach einem der Ansprüche 5 bis 7, **dadurch gekennzeichnet, dass** ein Lastanforderungsumfang der Anzahl von Lastverbrauchern bestimmt ist durch die Summe der Wirklasten (Pᵢ), einem Maximum der Lastsprünge (ΔPᵢ^{MAX}) und/oder einem übergeordneten Wert der Lastrampen (δPᵢ^{RESBL})

9. Verfahren nach einem der Ansprüche 5 bis 8, **dadurch gekennzeichnet, dass** die summarische Randbedingung dadurch gebildet ist, dass
die Summe aller darstellbaren Leistungssprünge (SUM(ΔPⱼ)) größer als ein Maximum der Lastsprünge (MAX ΔPᵢ) der Anzahl von Lastverbrauchern ist und/oder die Summe aller einzelnen darstellbaren Leistungsrampen (SUM(δPⱼ)) größer ist als ein übergeordneter Wert der Lastrampen (RESBL δPᵢ).

10. Verfahren nach einem der Ansprüche 1 bis 9, **dadurch gekennzeichnet, dass**
bei der drehzahlvariablen Brennkraftmaschine die Drehzahl (nⱼ) und die Leistung (Pⱼ) bedingt unabhängig einstellbar sind, insbesondere in einer zweiten Teilregelung (502) eine Drehzahl der drehzahlvariablen Brennkraftmaschine (400) angepasst wird.

11. Verfahren nach einem der Ansprüche 1 bis 10, **dadurch gekennzeichnet, dass**
das Rechenmodell (504) ein thermodynamisches Modell am Betriebszustand (Z*) der Brennkraftmaschine (400) ist, mit einer Anzahl von Größen, ausgewählt aus der Gruppe bestehend aus:
Leistung (P_{j'}) der Brennkraftmaschine,
Drehzahl (nⱼ) der Brennkraftmaschine,
Temperatur (Tⱼ) der Brennkraftmaschine,
Umgebungstemperatur (T_{amb}),
Umgebungsdruck (p_{amb}),
Abgasgegendruck (p_{AG}),
Trägheitsmoment (Jⱼ) der Brennkraftmaschinen-Generator-Einheit (401, 402, 404 - 408),
spezifischer Kraftstoffverbrauch (sfc).

12. Verfahren nach einem der Ansprüche 1 bis 11, **dadurch gekennzeichnet, dass**
das Bestimmen einer Anzahl (#GENSET) von an das Verteilernetz anzuschließenden Brennkraftmaschinen-Generator-Einheiten in Abhängigkeit des Lastanforderungsumfangs durch Vergleich der Lastsumme der Verbraucher (SUM(LOAD)) mit der Leistungssumme der Brennkraftmaschinen-Generator-Einheiten (SUM(GENSET)) erfolgt.

13. Verfahren nach einem der Ansprüche 1 bis 12, **dadurch gekennzeichnet, dass** eine Drehzahl (nⱼ) der Brennkraftmaschine und/oder eine sonstige den Betriebszustand kennzeichnende Größe geändert wird,
- wenn ein auf die angeforderte Einheit bezogener Betrag einer variablen Lastverteilung in Bezug auf den aktuellen Betriebszustand außerhalb eines zulässigen, das Lastaufschaltvermögen beschreibenden Betriebszustandsbereichs (ZB*) der Brennkraftmaschine liegt und/oder
- wenn eine noch nicht optimierte Größe des Rechenmodells vorliegt.

14. Verfahren nach einem der Ansprüche 1 bis 13, **dadurch gekennzeichnet, dass**, insbesondere für die erste und/oder zweite Teilregelung (501, 502), eine Optimierungsstrategie vorgegeben wird, unter deren Randbedingung innerhalb eines sicheren Betriebszustandsbereichs (ZB*) ein neuer Betriebszustand der Brennkraftmaschine eingestellt wird.

15. Verfahren nach einem der Ansprüche 1 bis 14, **dadurch gekennzeichnet, dass** ein Betriebszustandsbereich (ZB*) wiederholt für Änderungen des Betriebszustands abgeleitet wird, insbesondere eine erste Teilregelung (501) und/oder eine zweite Teilregelung (502) eine Regelschleife (514, 525) umfassen, in der ein Betriebszustandsbereich (ZB*) wiederholt für Änderungen des Betriebszustands abgeleitet wird.

16. Einrichtung zur Steuerung und Regelung eines Brennkraftmaschinen-Generator-Systems mit einer Anzahl von an ein Verteilernetz anschließbaren, elektrische Leistung generierenden Brennkraftmaschinen-Generator-Einheiten und elektrische Leistung verbrauchenden Lastverbrauchern, wobei eine Einheit eine drehzahlvariable Brennkraftmaschine und einen Generator aufweist, umfassend Regel- und Prozessormittel zum
(a) Bestimmen eines aktuellen Betriebszustands (Z*) der Brennkraftmaschine der wenigstens einen Brennkraftmaschinen-Generator-Einheit;
(b) Ableiten eines ein Lastaufschaltvermögen in Abhängigkeit vom aktuellen Betriebszustand (Z*) beschreibenden Betriebszustandsbereichs (ZB*) für die Brennkraftmaschine der wenigstens einen Brennkraftmaschinen-Generator-Einheit, wobei
das Bestimmen des aktuellen Betriebszustands (Z*) und das Ableiten des Betriebszustandsbereichs (ZB*) auf Grundlage eines Rechenmodells für die Brennkraftmaschine erfolgt;
(c) Bereitstellen eines mögliche Lastanforderungen der Anzahl von Lastverbrauchern beschreibenden Lastforderungsumfangs;
**gekennzeichnet durch** Regel- und Prozessormittel zum
(d) Bestimmen einer Anzahl von an das Verteilernetz anzuschließenden Brennkraftmaschinen-Generator-Einheiten in Abhängigkeit von dem Lastanforderungsumfang,
- Bestimmen einer variablen Lastverteilung und/oder einer variablen Drehzahlverteilung auf die Anzahl Brennkraftmaschinen der Anzahl Brennkraftmaschinen-Generator-Einheiten in Abhängigkeit von dem Lastanforderungsumfang,
- unter Berücksichtigung des aktuellen Betriebszustands und des Lastaufschaltvermögens der Brennkraftmaschine der wenigstens einen Brennkraftmaschinen-Generator-Einheit.

17. Einrichtung zur Steuerung und Regelung nach Anspruch 16, **dadurch gekennzeichnet, dass** eine zweite, insbesondere die drehzahlvariable Brennkraftmaschine betreffende, Teilregelung mit Regel- und Prozessormitteln zum Durchführen der Schritte (a) und (b) versehen ist und/oder eine erste, insbesondere das System betreffende, übergeordnete erste Teilregelung, mit Regel- und Prozessormitteln zum Durchführen des Schrittes (c), insbesondere (d) versehen ist.

18. Brennkraftmaschinen-Generator-System mit einer Anzahl von an ein Verteilernetz anschließbaren elektrische Leistung generierenden Brennkraftmaschinen-Generator-Einheiten und elektrische Leistung verbrauchenden Lastverbrauchern, wobei eine Einheit eine drehzahlvariable Brennkraftmaschine und einen Generator aufweist und mit einer Einrichtung zur Steuerung und Regelung nach Anspruch 16 oder 17.

19. Land- oder Wasserfahrzeug --insbesondere Allzweck-Fahrzeug, Nutzfahrzeug oder Schiff-- mit einem Brennkraftmaschinen-Generator-System nach Anspruch 18.

20. Stationäre Anlage zur Erzeugung elektrischer Energie mit einem Brennkraftmaschinen-Generator-System nach Anspruch 18.

## Claims

1. A method for controlling and regulating an internal combustion engine/generator system (1000) with a number of internal combustion engine/generator units (400) which generate electric power and can be connected to a distribution network and load consumers (200) which consume electric power, wherein a unit (400) has a variable-speed internal combustion engine (401, 402, 404 - 408) and a generator (421 - 428), comprising the steps:
(a) determining a current operating state (Z*) of the internal combustion engine (401, 402, 404 - 408) of the at least one internal combustion engine/generator unit (400); and
(b) deriving an operating state range (ZB*) which describes a load application capability (L^{adm}), dependent on the current operating state (Z*) for the internal combustion engine of the at least one internal combustion engine/generator unit (400), wherein
the determining of the current operating state (Z*) and the deriving of the operating state range (ZB*) take place on the basis of a computational model (504) for the internal combustion engine (401, 402, 405 - 408);
(c) providing a load demand scope which describes possible load demands of the number of load consumers (200); and
**characterised in that**
(d) taking into account the current operating state (Z*) and the load application capability (L^{adm}) of the internal combustion engine (401, 402, 404 - 408) of the at least one internal combustion engine/generator unit (400):
- determining a number (#GENSET) of internal combustion engine/generator units (400) which are to be connected to the distribution network, dependent on the load demand scope; and
- determining a variable load distribution (L^{req}) and/or a variable speed distribution (n^{req}) for the number of internal combustion engines (400), dependent on the load demand scope.

2. A method according to Claim 1, **characterised in that** in deriving the operating state range (ZB*) a permissible operating range of a generator of the internal combustion engine/generator unit (400), in particular with regard to speed, excitation and/or voltage, is taken into account.

3. A method according to Claim 1 or 2, **characterised in that**
steps (c) and/or (d) are carried out in a first higher-level partial regulation stage (501), and steps (a) and (b) in a second partial regulation stage (502).

4. A method according to Claim 3, **characterised in that** the first higher-level partial regulation stage (501) relates to the system and/or the second partial regulation stage (502) relates to the variable-speed internal combustion engine (401, 402, 404 - 408).

5. A method according to one of Claims 1 to 4, **characterised in that**
a load application capability (L^{adm}) at a current operating state (Z*) is **characterised by** a possible or permissible sudden power variation (ΔPⱼ)^{adm} and a possible or permissible power ramp (δPi)^{adm}, and/or a possible load demand of the at least one load consumer (200) is determined by a resistive load (Pᵢ), a sudden load variation (ΔPᵢ) and/or a load ramp (δPᵢ).

6. A method according to one of Claims 1 to 5, further having the step:
e) comparing the load application capability (L^{adm}) with the variable load distribution (L^{req}), which is dependent on the load demand scope, for the internal combustion engine (400), in particular in a second partial regulation stage (502) relating to the variable-speed internal combustion engine (400).

7. A method according to one of Claims 1 to 6, **characterised in that**
the variable load distribution (L^{req}) and/or the speed distribution (n^{req}) is/are subjected to a summary boundary condition, with the sum of all the load application capabilities (L^{adm}) of the internal combustion engines on the basis of the computational model (504) for the at least one internal combustion engine (400) being greater than the load demand scope of the number of load consumers (200).

8. A method according to one of Claims 5 to 7, **characterised in that**
a load demand scope of the number of load consumers is determined by the sum of the resistive loads (Pᵢ), a maximum of the sudden load variations (ΔPᵢ^{MAX}) and/or a higher-level value of the load ramps (δPᵢ^{RESBL}).

9. A method according to one of Claims 5 to 8, **characterised in that** the summary boundary condition is formed **in that**
the sum of all the sudden power variations which can be represented (SUM(ΔPⱼ)) is greater than a maximum of the sudden load variations (MAX ΔPᵢ) of the number of load consumers and/or the sum of all the individual power ramps (SUM(δPⱼ)) which can be represented is greater than a higher-level value of the load ramps (RESBL δPⱼ).

10. A method according to one of Claims 1 to 9, **characterised in that**
in the variable-speed internal combustion engine the speed (nⱼ) and the power (Pⱼ) are limitedly independently adjustable, in particular in a second partial regulation stage (502) a speed of the variable-speed internal combustion engine (400) is adapted.

11. A method according to one of Claims 1 to 10, **characterised in that**
the computational model (504) is a thermodynamic model at the operating state (Z*) of the internal combustion engine (400), with a number of variables, selected from the group consisting of:
power (P_{j'}) of the internal combustion engine,
speed (nⱼ) of the internal combustion engine,
temperature (Tⱼ) of the internal combustion engine,
ambient temperature (T_{amb}),
ambient pressure (p_{amb}),
exhaust back-pressure (p_{AG}),
moment of inertia (Jⱼ) of the internal combustion engine/generator unit (401, 402, 404 - 408),
specific fuel consumption (sfc).

12. A method according to one of Claims 1 to 11, **characterised in that**
the determining of a number (#GENSET) of internal combustion engine/generator units which are to be connected to the distribution network, takes place dependent on the load demand scope by comparison of the load sum of the consumers (SUM(LOAD)) with the power sum of the internal combustion engine/generator units (SUM(GENSET)).

13. A method according to one of Claims 1 to 12, **characterised in that** a speed (nj) of the internal combustion engine and/or another variable characterising the operating state is changed
- if an amount, related to the required unit, of a variable load distribution in relation to the current operating state lies outside a permissible operating state range (ZB*), which describes the load application capability, of the internal combustion engine, and/or
- if a not yet optimised variable of the computational model is present.

14. A method according to one of Claims 1 to 13, **characterised in that**, in particular for the first and/or second partial regulation stage (501, 502), an optimisation strategy is specified, under the boundary condition of which within a safe operating state range (ZB*) a new operating state of the internal combustion engine is set.

15. A method according to one of Claims 1 to 14, **characterised in that** an operating state range (ZB*) is repeatedly derived for changes in the operating state, in particular a first partial regulation stage (501) and/or a second partial regulation stage (502) comprise(s) a loop (514, 525) in which an operating state range (ZB*) is repeatedly derived for changes in the operating state.

16. A means for controlling and regulating an internal combustion engine/generator system with a number of internal combustion engine/generator units which generate electric power and can be connected to a distribution network and load consumers which consume electric power, wherein one unit has a variable-speed internal combustion engine and a generator, comprising regulating and processor means for
(a) determining a current operating state (Z*) of the internal combustion engine of the at least one internal combustion engine/generator unit;
(b) deriving an operating state range (ZB*) which describes a load application capability, dependent on the current operating state (Z*) for the internal combustion engine of the at least one internal combustion engine/generator unit, wherein the determining of the current operating state (Z*) and the deriving of the operating state range (ZB*) take place on the basis of a computational model for the internal combustion engine;
(c) providing a load demand scope which describes possible load demands of the number of load consumers;
**characterised by** regulating and processor means for
(d) determining a number of internal combustion engine/generator units which are to be connected to the distribution network, dependent on the load demand scope,
- determining a variable load distribution and/or a variable speed distribution for the number of internal combustion engines of the number of internal combustion engine/generator units, dependent on the load demand scope,
- taking into account the current operating state and the load application capability of the internal combustion engine of the at least one internal combustion engine/generator unit.

17. A means for controlling and regulating according to Claim 16, **characterised in that** a second partial regulation stage, in particular relating to the variable-speed internal combustion engine, is provided with regulating and processor means for carrying out steps (a) and (b), and/or a first higher-level first partial regulation stage, in particular relating to the system, is provided with regulating and processor means for carrying out step (c), in particular (d).

18. An internal combustion engine/generator system with a number of internal combustion engine/generator units which generate electric power and can be connected to a distribution network and load consumers which consume electric power, wherein one unit has a variable-speed internal combustion engine and a generator, and with a means for controlling and regulating according to Claim 16 or 17.

19. A land vehicle or water-borne vehicle - in particular all-purpose vehicle, commercial vehicle or ship - with an internal combustion engine/generator system according to Claim 18.

20. A stationary installation for generating electrical energy with an internal combustion engine/generator system according to Claim 18.

## Revendications

1. Procédé de commande et de régulation d'un système de groupe électrogène à moteur à combustion interne (1000) comprenant un certain nombre de groupes électrogènes à moteur à combustion interne (400) pouvant être raccordés à un réseau de distribution et générant de l'énergie électrique, et des consommateurs de charge (200) consommant de l'énergie électrique, un groupe (400) comprenant un moteur à combustion interne (401, 402, 404 - 408) à variation de la vitesse de rotation et un générateur (421 - 428), comprenant les étapes consistant à:
(a) déterminer un état de fonctionnement actuel (Z*) du moteur à combustion interne (401, 402, 404-408) du au moins un groupe électrogène à moteur à combustion interne (400) ; et
(b) dériver une plage d'états de fonctionnement (ZB*) décrivant une capacité d'augmentation de charge (L^{adm}) en fonction de l'état de fonctionnement actuel (Z*) pour le moteur à combustion interne de l'au moins un groupe électrogène à moteur à combustion interne (400), où
la détermination de l'état de fonctionnement actuel (Z*) et la dérivation de la plage d'états de fonctionnement (ZB*) a lieu sur la base d'un modèle de calcul (504) pour le moteur à combustion interne (401, 402, 405-408);
(c) fournir des demandes de charge possibles du nombre de consommateurs de charge (200) décrivant l'ampleur des demandes de charge ; et **caractérisé en ce que**
(d) en tenant compte de l'état de fonctionnement actuel (Z*) et de la capacité d'augmentation de charge (L^{adm}) du moteur à combustion interne (401, 402, 404 - 408) du au moins un groupe électrogène à moteur à combustion interne (400) :
- la détermination d'un nombre (#GENSET) de groupes électrogènes à moteur à combustion interne (400)) à connecter au réseau de distribution en fonction de l'ampleur de demande de charge ; et
- la détermination de la distribution de charge variable (L^{req}) et/ou une distribution de vitesse variable (n^{req}) pour le nombre de moteurs à combustion interne (400) en fonction de l'ampleur de demande de charge.

2. Procédé selon la revendication 1, **caractérisé en ce que** lors du calcul de la plage d'état de fonctionnement (ZB*) une plage de fonctionnement admissible d'un générateur du groupe électrogène à moteur à combustion interne (400), notamment en ce qui concerne la vitesse, l'excitation et/ou la tension, est prise en compte.

3. Procédé selon la revendication 1 ou 2, **caractérisé en ce que**
les étapes (c) et/ou (d) sont exécutés dans une première régulation partielle de niveau supérieur (501), et les étapes (a) et (b) dans une deuxième régulation partielle (502).

4. Procédé selon la revendication 3, **caractérisé en ce que** la première régulation partielle de niveau supérieur (501) concerne le système et/ou la seconde régulation partielle (502) concerne le moteur à combustion interne à vitesse variable (401, 402, 404-408).

5. Procédé selon l'une quelconque des revendications 1 à 4, **caractérisé en ce qu'**une capacité d'augmentation de charge (L^{adm}) à un état de fonctionnement courant (Z*) est **caractérisée par** un saut de puissance possible ou admissible (ΔPⱼ)^{adm} et une rampe de puissance possible ou admissible (δPⱼ)^{adm} et/ou une demande de charge possible du au moins un consommateur de charge (200) est déterminée par une charge active (Pⱼ), un saut de charge (ΔPⱼ) et/ou une rampe de charge (δPⱼ).

6. Procédé selon l'une quelconque des revendications 1 à 5, comprenant en outre l'étape :
e) de comparaison de la capacité d'augmentation de charge (L^{adm}) avec la répartition de charge variable (L^{req}) en fonction de l'ampleur de demande de charge pour le moteur à combustion interne (400), en particulier lors d'une deuxième régulation partielle appropriée (502) du moteur à combustion interne à vitesse variable (400).

7. Procédé selon l'une quelconque des revendications 1 à 6, **caractérisé en ce que** la répartition de charge variable (L^{req}) et/ou la répartition de vitesse (n^{req}) est soumise à une condition marginale de sommation, dans lequel la somme de toutes les capacités d'augmentation de charge (L^{adm}) des moteurs à combustion interne basée sur le modèle (504) de calcul pour le au moins un moteur à combustion interne (400) est supérieur à l'ampleur des demandes de charge du nombre de consommateurs de charge (200).

8. Procédé selon l'une quelconque des revendications 5 à 7, **caractérisé en ce qu'**une ampleur des demandes de charge du nombre de consommateurs de charge est déterminée par la somme des charges actives (Pⱼ), un maximum des sauts de charge (ΔPᵢ^{MAX}) et/ou une valeur de niveau supérieur des rampes de charge (δPᵢ^{RESBL})

9. Procédé selon l'une quelconque des revendications 5 à 8, **caractérisé en ce que** la condition marginale sommaire est formée **en ce que** la somme de tous les sauts de puissance représentables (SUM(ΔPj)) est supérieure à un maximum des sauts de charge (MAX ΔPⱼ) du nombre de consommateurs de charge et/ou la somme de toutes les rampes de puissance représentables individuelles (SUM(δPⱼ)) est supérieure à une valeur de niveau supérieur des rampes de charge (RESBL δPⱼ).

10. Procédé selon l'une quelconque des revendications 1 à 9, **caractérisé en ce que** dans le moteur à combustion interne à vitesse variable, la vitesse (nⱼ) et la puissance (Pⱼ) sont conditionnellement réglables indépendamment, notamment dans une deuxième régulation partielle (502) la vitesse du moteur à combustion interne à vitesse variable (400) est adaptée.

11. Procédé selon l'une quelconque des revendications 1 à 10, **caractérisé en ce que** le modèle arithmétique (504) est un modèle thermodynamique de l'état de fonctionnement (Z*) du moteur à combustion interne (400), avec un certain nombre de variables choisies dans le groupe constitué par :
la puissance (Pⱼ) du moteur à combustion interne,
la vitesse (nⱼ) du moteur à combustion interne,
la température (Tⱼ) du moteur à combustion interne,
la température ambiante (T_{amb}),
la pression ambiante (P_{amb}),
la contre-pression d'échappement (P_{AG}),
le moment d'inertie (Jⱼ) du groupe électrogène à moteur à combustion interne (401, 402, 404-408),
la consommation spécifique de carburant (sfc).

12. Procédé selon l'une quelconque des revendications 1 à 11, **caractérisé en ce que** l'on détermine un nombre (#GENSET) de groupes électrogènes à moteur à combustion interne à connecter au réseau de distribution en fonction de l'étendue de besoin de charge en comparant la somme de charge des consommateurs (SUM(LOAD)) avec la puissance totale des groupes électrogènes à moteur à combustion interne (SUM(GENSET)).

13. Procédé selon l'une quelconque des revendications 1 à 12, **caractérisé en ce qu'**une vitesse (nⱼ) du moteur à combustion interne et/ou une autre variable caractérisant l'état de fonctionnement est modifiée :
- lorsqu'une quantité de distribution de charge variable liée au groupe demandé par rapport à l'état de fonctionnement actuel se situe en dehors d'une plage d'état de fonctionnement admissible (ZB*) du moteur à combustion interne qui décrit la capacité d'augmentation de charge, et/ou
- si une grandeur non encore optimisée du modèle de calcul est disponible.

14. Procédé selon l'une quelconque des revendications 1 à 13, **caractérisées en ce que**, en particulier pour la première et/ou la seconde régulation partielle (501, 502), une stratégie d'optimisation est spécifiée, au sein des conditions limites de laquelle un nouvel état de fonctionnement du moteur à combustion interne est établi dans une plage d'état de fonctionnement sûr (ZB *).

15. Procédé selon l'une quelconque des revendications 1 à 14, **caractérisé en ce qu'**une plage d'état de fonctionnement (ZB*) est dérivée à plusieurs reprises pour des changements d'état de fonctionnement, en particulier comprenant une première régulation partielle (501) et/ou une deuxième régulation partielle (502) d'une boucle de régulation (514, 525), dans laquelle une plage d'état de fonctionnement (ZB*) est dérivée à plusieurs reprises pour les changements d'état de fonctionnement.

16. Dispositif de commande et de régulation d'un système de moteur-générateur à combustion interne avec un certain nombre de groupes électrogènes à moteur à combustion interne qui peuvent être connectées à un réseau de distribution, générant de l'énergie électrique et consommant de l'énergie électrique, dans lequel un groupe présente un moteur à combustion interne à vitesse variable et un générateur, comprenant des moyens de commande et processeur pour
(a) déterminer un état de fonctionnement actuel (Z*) du moteur à combustion interne de l'au moins un groupe électrogène à moteur à combustion interne ;
(b) dériver une plage d'état de fonctionnement (ZB*), qui décrit une capacité d'augmentation de charge en fonction de l'état de fonctionnement actuel (Z*) pour le moteur à combustion interne de l'au moins un groupe électrogène à moteur à combustion interne, dans lequel
la détermination de l'état de fonctionnement actuel (Z*) et la dérivation de la plage d'état de fonctionnement a lieu sur la base d'un modèle de calcul pour le moteur à combustion interne ;
(c) fournir une ampleur des demandes de charge décrivant les demandes de charge possibles du nombre de consommateurs de charge ; **caractérisé par** des moyens de commande et de traitement pour
(d) déterminer un nombre de groupes électrogènes à moteur à combustion interne à connecter au réseau de distribution en fonction de la demande de charge,
- déterminer une répartition de charge variable et/ou une distribution de vitesse variable sur le nombre de moteurs à combustion interne du nombre de groupes électrogènes à moteur à combustion interne en fonction de l'ampleur de demande de charge,
- en tenant compte de l'état de fonctionnement actuel et de la capacité d'augmentation de charge du moteur à combustion interne de l'au moins un groupe électrogène à moteur à combustion interne.

17. Dispositif de commande et de régulation selon la revendication 16, **caractérisé en ce qu'**une deuxième régulation partielle, en particulier du moteur à combustion interne à vitesse variable, est pourvue de moyens de commande et de traitement pour réaliser les étapes (a) et (b) et/ou une première, notamment la première régulation partielle de niveau supérieur liée au système est pourvue de moyens de commande et de processeur pour exécuter l'étape (c), en particulier l'étape (d).

18. Système de moteur-générateur à combustion interne avec un certain nombre de groupes électrogènes à moteur à combustion interne qui peuvent être connectées à un réseau de distribution, générant de l'énergie électrique et des consommateurs de charge consommant de l'énergie électrique, un groupe ayant un moteur à combustion interne à vitesse variable et un générateur et avec un dispositif de commande et de régulation selon la revendication 16 ou 17.

19. Véhicule terrestre ou nautique - en particulier véhicule polyvalent, véhicule utilitaire ou navire - avec un système de moteur-générateur à combustion interne selon la revendication 18.

20. Système stationnaire de génération d'énergie électrique avec un système de moteur-générateur à combustion interne selon la revendication 18.
